(19) Europäisches Patentamt / European Patent Office / Office européen des brevets

(11) EP 4 664 778 A1

(12) EUROPEAN PATENT APPLICATION
published in accordance with Art. 153(4) EPC

(43) Date of publication:
17.12.2025 Bulletin 2025/51

(21) Application number: 24753616.2

(22) Date of filing: 06.02.2024

(51) International Patent Classification (IPC):
H04B 7/022 (2017.01)      H04W 16/24 (2009.01)
H04W 24/02 (2009.01)      H04W 88/08 (2009.01)
H04L 41/06 (2022.01)      H04W 92/20 (2009.01)
H04L 43/0817 (2022.01)      H04L 43/08 (2022.01)
H04L 43/16 (2022.01)

(52) Cooperative Patent Classification (CPC):
H04B 7/022; H04L 41/06; H04L 43/08;
H04L 43/0817; H04L 43/16; H04W 16/24;
H04W 24/02; H04W 88/08; H04W 92/20

(86) International application number:
PCT/KR2024/001769

(87) International publication number:
WO 2024/167291 (15.08.2024 Gazette 2024/33)

(84) Designated Contracting States:
AL AT BE BG CH CY CZ DE DK EE ES FI FR GB
GR HR HU IE IS IT LI LT LU MC ME MK MT NL
NO PL PT RO RS SE SI SK SM TR
Designated Extension States:
BA
Designated Validation States:
GE KH MA MD TN

(30) Priority:  06.02.2023  KR 20230015810
08.02.2023  KR 20230016495
16.02.2023  KR 20230020932
24.05.2023  KR 20230066951

(71) Applicant: SOLiD LABS, Inc.
Seongnam-si, Gyeonggi-do 13493 (KR)

(72) Inventor: HONG, Hoony
Seoul 06361 (KR)

(74) Representative: Jung, Minkyu
Wuesthoff & Wuesthoff
Patentanwälte und Rechtsanwalt PartG mbB
Schweigerstraße 2
81541 München (DE)

(54) METHOD AND APPARATUS FOR IDENTIFYING PERFORMANCE OF COMMUNICATION NODE IN COMMUNICATION SYSTEM

(57) According to an embodiment of the present disclosure, a method performed by a middle node in a communication system includes: receiving a configuration message including information related to a message to be combined in a shared cell from a north node; receiving user plane messages from a plurality of south nodes included in the shared cell, respectively; identifying packets to be combined from among respective packets included in the received user plane messages based on the information related to the message to be combined in the shared cell; and determining respective uplink counter values for the plurality of south nodes by counting the identified packets to be combined.

FIG. 16

START
→ RECEIVE INFORMATION RELATED TO MESSAGE TO BE COMBINED IN SHARED CELL — S1610
→ RECEIVE USER PLANE MESSAGES FROM PLURALITY OF SOUTH NODES, RESPECTIVELY — S1620
→ IDENTIFY PACKETS TO BE COMBINED FROM AMONG RESPECTIVE PACKETS INCLUDED IN USER PLANE MESSAGES BASED ON INFORMATION RELATED TO MESSAGES TO BE COMBINED IN SHARED CELL — S1630
→ DETERMINE RESPECTIVE UPLINK COUNTER VALUES FOR PLURALITY OF SOUTH NODES BY COUNTING IDENTIFIED PACKETS TO BE COMBINED — S1640
→ END

**Description**

TECHNICAL FIELD

The present disclosure relates to a method and an apparatus for checking performance of a communication node in a communication system.

BACKGROUND ART

As wireless communication systems develop and evolve into 4th generation (4G) communication systems, 5g generation (5G) communication systems, etc., various functions and specifications are required. In order to satisfy these functions and specifications, various methods have been introduced, and one of them is a method of implementing a network infrastructure structure by functionally splitting it. A representative configuration of the functional split method is that a base station can be expressed as a centralized unit (CU), a distributed unit (DU) and a radio unit (RU) according to its function, and interfaces of respective units are defined by organizations such as 3GPP and the O-RAN alliance.

DESCRIPTION OF EMBODIMENTS

TECHNICAL PROBLEM

One problem to be solved by the present disclosure is to check communication performance in a fronthaul in a method of configuring a plurality of cells or one or more shared cells.

Another problem to be solved by the present disclosure is to check communication status while saving resources in O-RAN in a method of configuring a shared cell.

SOLUTION TO PROBLEM

According to an embodiment, the method may further include: receiving information related to a first interval or a second interval for counter reporting via a control plane message from the north node; transmitting respective uplink counter values and uplink combining counter values for the plurality of south nodes to the north node for each of the first interval, or transmitting respective uplink counter values and uplink combining counter values for the plurality of south nodes to a memory or storage server of the north node in a file format for each of the second interval.

According to an embodiment, wherein the information related to the message to be combined in the shared cell may include information about a transport flow and an extended antenna-carrier (eAxC) identifier (ID) of a message to be combined among uplink messages to be transmitted from the plurality of south nodes, and wherein the information about the transport flow may include a source media access control (MAC) or Internet protocol (IP) address and a destination MAC or IP (MAC/IP) address of the message to be combined.

According to an embodiment, wherein the identifying of packets to be combined from among respective packets included in the received user plane messages based on the information related to the message to be combined in the shared cell may include: identifying the transport flow and the eAxC ID of the respective packets included in the user plane messages; when a destination MAC/IP address of at least one first packet from among the respective packets included in the user plane messages is not an MAC/IP address of the middle node, transmitting the at least one first packet to the north node without combining; when a destination MAC/IP address of at least one second packet from among the respective packets included in the user plane messages is an MAC/IP address of the middle node, and the eAxC ID is different from an eAxC ID included in the information related to the message to be combined in the shared cell, dropping the at least one second packet; when a destination MAC/IP address of at least one third packet from among the respective packets included in the user plane messages is an MAC/IP address of the middle node, and the eAxC ID matches an eAxC ID included in the information related to the message to be combined in the shared cell, identifying the at least one third packet as the packets to be combined.

According to an embodiment, the method may further include when the respective uplink combining counter values for the plurality of south nodes are all the same, determining that there are no missing packets in the respective user plane messages received from the plurality of south nodes or determining that the same number of packets are missing in the respective user plane messages received from the plurality of south nodes.

According to an embodiment, the method may further include when a difference between an uplink counter value for a first south node from among the plurality of south nodes and an uplink combining counter value for the first south node gradually increases, determining that messages received from the first south node are continuously missing.

According to an embodiment, the method may further include when the respective uplink combining counter values for the plurality of south nodes are different, determining that some messages are missing at a specific time or a different number of messages are being received.

According to an embodiment, wherein the middle node may include a fronthaul-multiplexer or a cascade radio unit, the north node may include a middle node different from the middle node, a distributed unit, a radio unit controller, or service management and orchestration (SMO), and the plurality of south nodes may include another middle node or radio unit.

According to an embodiment, the method may further include receiving configuration information for respective uplink counters and uplink combining counters for the plurality of south nodes from the north node, wherein the configuration information for the uplink counters and the uplink combining counters comprises information indicating a measurement interval of a counter, information indicating an object entity to measure a counter, and information about a notification interval or a file upload interval for reporting a counter value.

According to an embodiment of the disclosure, a middle node in a communication system, the middle node may include: a transceiver; a memory; and at least one processor electrically connected to the transceiver and the memory, wherein the at least one processor is configured to: receive a configuration message including information related to a message to be combined in a shared cell from a north node; receive user plane messages from a plurality of south nodes included in the shared cell, respectively; identify packets to be combined from among respective packets included in the received user plane messages based on the information related to the message to be combined in the shared cell; and determine respective uplink counter values for the plurality of south nodes by counting the identified packets to be combined.

ADVANTAGEOUS EFFECTS OF DISCLOSURE

According to an embodiment of the present disclosure, if a problem occurs in a port between south nodes included in a shared cell in a middle node, the problem may be identified.

According to an embodiment of the present disclosure, the performance of copying or combining in a middle node may be checked based on a counter.

Effects according to the inventive concept of the present disclosure are not limited to the effects described above, and other effects not described herein may be clearly understood by one of ordinary skill in the art from the following description.

BRIEF DESCRIPTION OF DRAWINGS

FIG. 1A is a view of a wireless communication system according to various embodiments of the present disclosure.
FIG. 1B is a view illustrating an example of a fronthaul structure according to functional split of a base station, according to various embodiments of the present disclosure.
FIG. 2 is a view of an O-RAN network system according to an embodiment of the present disclosure.
FIG. 3 is a view of a structure of an O-RAN wireless communication system according to an embodiment of the present disclosure.
FIG. 4 is a view of a structure of an Ethernet message according to an embodiment of the present disclosure.
FIGS. 5A and 5B are views illustrating an example of a C-plane message according to an embodiment of the present disclosure.
FIG. 6 is a view of a structure of an O-RAN base station including a middle node according to an embodiment of the present disclosure.
FIG. 7 is a view of a system including a counter in an uplink according to an embodiment of the present disclosure.
FIG. 8 is a view of a flow of messages for performing combining in a middle node according to an embodiment of the present disclosure.
FIG. 9 is a view of a system including a counter in a downlink according to an embodiment of the present disclosure.
FIG. 10 is a view of a flow of messages for performing copying in a middle node according to an embodiment of the present disclosure.
FIG. 11 is a flowchart illustrating a method of determining and reporting a performance counter according to an embodiment of the present disclosure.
FIG. 12 is a view of a performance management part in a Yang model according to an embodiment of the present disclosure.
FIG. 13 is a view of a configuration of a north node according to an embodiment of the present disclosure.
FIG. 14 is a view of a configuration of a middle node according to an embodiment of the present disclosure.
FIG. 15 is a view of a configuration of a south node according to an embodiment of the present disclosure.
FIG. 16 is a flowchart illustrating a method of performance measurement and reporting according to an embodiment of the present disclosure.

MODE OF DISCLOSURE

Hereinafter, embodiments of the disclosure will be described in detail with the accompanying drawings.

In the description of the embodiments of the disclosure, certain detailed explanations of a related function or configuration are omitted when it is deemed that they may unnecessarily obscure the essence of the disclosure. In addition, the terms described below are defined in consideration of the functions in the disclosure, and may vary depending on the intention or custom of a user or an operator. Therefore, the definition needs to be made based on content throughout this specification.

For the same reason, some components may be exaggerated, omitted, or schematically shown in the accompanying drawings. In addition, the size of each component does not entirely reflect its actual size. In each drawing, identical or corresponding components are given the same reference numerals.

Advantages and features of the disclosure, and implementation methods thereof will be clarified through following embodiments described with reference to the accompanying drawings. However, the disclosure is not limited to the embodiments disclosed below, but may be implemented in various different forms. The embodiments are provided only to ensure that the description of the disclosure is complete and to fully inform one of ordinary skill in the art of the scope of the invention to which the embodiments of the disclosure pertain, and the claimed scope of the disclosure is only defined by the scope of the claims.

At this time, it will be understood that each block of processing flowcharts and combinations of the processing flowcharts may be performed by computer program instructions. Because these computer program instructions may be mounted on a processor of a general-purpose computer, special-purpose computer, or other programmable data processing equipment, the instructions performed through the processor of the computer or other programmable data processing device creates a unit to perform functions described in flow chart block(s). These computer program instructions may also be stored in computer-usable or computer-readable memory that can be directed to a computer or other programmable data processing equipment to implement the functions in a particular manner. Accordingly, the instructions stored in the computer-usable or computer-readable memory may also produce manufactured items containing an instruction unit that performs the functions described in the flow chart block(s). Because the computer program instructions can be mounted on a computer or other programmable data processing equipment, instructions that execute a computer or other programmable data processing equipment by performing a series of operations on a computer or other programmable data processing equipment to generate a computer-executable process may also provide operations for executing the functions described in the flow chart block(s).

In addition, each block may represent a module, segment, or portion of code containing one or more executable instructions for executing specified logical function(s). In addition, in some alternative implementations, it should be noted that functions mentioned in the blocks to occur out of order. For example, two blocks shown in succession may be performed substantially simultaneously, or the blocks may sometimes be performed in reverse order depending on their corresponding functions.

The term "unit or part" used in the disclosure refers to software or hardware components such as a field-programmable gate array (FPGA) or an application specific integrated circuit (ASIC), and the "unit or part" may be configured to perform specific roles. However, the "unit or part" is not limited to software or hardware. The "unit or part" may be configured to be stored in an addressable storage medium or to execute one or more processors. Accordingly, the "unit or part" may include, for example, software components, object-oriented software components, components such as class components and task components, processors, formulas, attributes, procedures, subroutines, segments of program codes, drivers, firmware, micro codes, circuits, data, database, data structures, tables, arrays and variables. Functions provided in components and "units or parts" may be combined into a smaller number of components and "units or parts", or may be further divided into additional components and "units." Furthermore, components and "units or parts" may be implemented to reproduce one or more central processing units (CPUs) within a device or a secure multimedia card. In addition, in an embodiment, "unit or part" may include one or more processors and/or devices.

In various embodiments, the technologies described in the disclosure and systems and devices for implementation thereof may utilize other radio access technologies such as WiFi or WiMax as well as radio access technologies such as code division multiple access (CDMA), time division multiple access (TDMA), frequency division multiple access (FDMA), orthogonal FDMA (OFDMA), single-carrier FDMA (SC-FDMA), LTE, a global system for mobile communications (GSM), 5G NR, and the like to support communication between networks (or systems).

Various other embodiments and features according to the inventive concept of the disclosure will be further described later below. It should be apparent that the teachings herein may be implemented in a wide variety of forms and any particular structure, function, or both, disclosed herein are merely exemplary, and not limiting. Based on the teachings herein, those of ordinary skill in the art will appreciate that aspects disclosed herein may be implemented independently of any other aspects, and two or more of these aspects may be combined in various ways. For example, a device or a method may be implemented by using any number of aspects set forth herein. Furthermore, the device or the method may be implemented with structures and functions of one or more of the aspects described herein, or may be implemented by using structures and functions of other aspects. For example, the method may be implemented as a part of commands stored on a non-transitory computer-readable recording medium for execution on a system, a device, an apparatus and/or a processor, or a computer. Furthermore, one aspect may include at least one component of the claim.

Hereinafter, preferred embodiments of the disclosure will be described in detail with reference to the accompanying drawings. At this time, it should be noted that the same components in the attached drawings are indicated by the same symbols as much as possible. In addition, detailed descriptions of well-known functions and configurations that may obscure the gist of the disclosure will be omitted.

In describing the embodiments in this specification, descriptions of technical content that is well-known in the art and not directly related to the disclosure will be omitted. This is to convey the gist of the disclosure more clearly without obscuring it by omitting unnecessary explanation.

For the same reason, some components are exaggerated, omitted, or schematically shown in the accompanying drawings. In addition, the size of each component does not entirely reflect its actual size. In each drawing, identical or corresponding components are given the same reference numerals.

Advantages and features of the disclosure, and implementation methods thereof will be clarified through following embodiments described with reference to the accompanying drawings. However, the disclosure is not limited to the embodiments disclosed below, but may be implemented in various different forms. The embodiments are provided to ensure that the description of the disclosure is complete and to fully inform one of ordinary skill in the art of the scope of the disclosure, and the disclosure is only defined by the scope of the claims. Like reference numerals refer to like elements throughout.

At this time, it will be understood that each block of processing flow charts and combinations of the processing flow charts may be performed by computer program instructions. Because these computer program instructions may be mounted on a processor of a general-purpose computer, special-purpose computer, or other programmable data processing equipment, the instructions performed through the processor of the computer or other programmable data processing device creates a unit to perform functions described in flow chart block(s). These computer program instructions may also be stored in computer-usable or computer-readable memory that can be directed to a computer or other programmable data processing equipment to implement the functions in a particular manner. Accordingly, the instructions stored in the computer-usable or computer-readable memory may also produce manufactured items containing an instruction unit that performs the functions described in the flow chart block(s). Because the computer program instructions can be mounted on a computer or other programmable data processing equipment, instructions that execute a computer or other programmable data processing equipment by performing a series of operations on a computer or other programmable data processing equipment to generate a computer-executable process may also provide operations for executing the functions described in the flow chart block(s).

In addition, each block may represent a module, segment, or portion of code containing one or more executable instructions for executing specified logical function(s). In addition, in some alternative implementations, it should be noted that functions mentioned in the blocks to occur out of order. For example, two blocks shown in succession may be performed substantially simultaneously, or the blocks may sometimes be performed in reverse order depending on their corresponding functions.

At this time, the term "unit or part" used in the present embodiment means software or hardware components such as FPGA and ASIC, and the "unit or part" performs a particular function. However, the "unit or part" is not limited to software or hardware. The "unit or part" may be configured to be stored in an addressable storage medium or to play back one or more processors. Accordingly, the "unit or part" may include, for example, software components, object-oriented software components, components such as class components and task components, processors, formulas, attributes, procedures, subroutines, segments of program codes, drivers, firmware, micro codes, circuits, data, database, data structures, tables, arrays and variables. Functions provided in components and "units or parts" may be combined into a smaller number of components and "units or parts", or may be further divided into additional components and "units or parts." Furthermore, components and "units or parts" may be implemented to reproduce one or more CPUs within a device or a secure multimedia card.

Hereinafter, a base station is an entity that performs resource allocation for a terminal and may be at least one of a Node B, base station (BS), eNode B (eNB), gNode B (gNB), a radio access unit, a base station control device, or a node on a network. The terminal may include user equipment (UE), a mobile station (MS), a cellular phone, a smartphone, a computer, or a multimedia system capable of performing communication functions. In addition, the embodiment of the disclosure described below may be applied to other communication systems having a similar technical background or channel type as the embodiment of the disclosure. In addition, the embodiment of the disclosure may be applied to other communication systems through some modifications without significantly departing from the scope of the disclosure, at the discretion of one of ordinary skill in the art.

Terms used in the following description, such as terms for identifying an access node, terms referring to network entities or network functions (NFs), terms referring to messages, terms referring to interfaces between network objects, and terms referring to various identification information, are provided as examples for convenience of explanation. Therefore, the disclosure is not limited to the terms described below, and other terms referring to objects having equivalent technical meaning may be used.

For convenience of explanation below, some terms and names defined in 3rd generation partnership project (3GPP) long-term evolution (LTE), Internet engineering task force (IETF) and IEEE 802 Project standards may be used. However, the disclosure is not limited by the above terms and names, and may be equally applied to systems according to other standards.

Hereinafter, various embodiments according to the inventive concept of the disclosure will be described in detail one by one.

An O-RAN distributed unit (O-DU) may be a part of an O-RAN system, which is generally implemented in software. In more detail, the O-DU may be a logical node hosting an RLC/MACI High-PHY layer based on a lower layer functional split. An O-RAN radio unit (O-RU) may be a logical node that performs RF processing and hosts a Low-PHY layer based on a lower layer functional split. The O-RU may transmit and receive radio signals, which is the biggest feature of 3GPP's "TRP" or "RRH".

User Equipment (UE) is a device, such as a mobile phone, that allows a user to access a network service.

An uplink (UL) refers to a traffic flow through different network components from the UE to a network and from the O-RU to the O-DU. An interface from the UE to the O-RU is wireless, while a UL traffic from the O-RU to the O-DU may take various forms (e.g., Ethernet connection) such as wireless and wired.

A downlink (DL) refers to a traffic flow through network components from the O-DU to the O-RU and from the network to the UE. A fronthaul interface from the O-DU to the O-RU may have various forms (e.g., Ethernet) such as wired or wireless, while an interface from the O-RU to the UE may be a wireless interface.

The O-RAN specification may include four planes: user plane (U-plane), control plane (C-plane), synchronization plane (S-plane), and management plane (M-plane).

The user plane (U-plane) may be a concept that includes IQ sample data transmitted between the O-DU and the O-RU.

The control plane (C-plane) is a concept that specifically refers to scheduling information, beamforming information transfer, and other real-time control between the O-DU and the O-RU, and may be distinguished from a UE's control plane.

The synchronization plane (S-plane) generally includes time and frequency synchronization configuration and information exchange, and may include other network elements in addition to the O-DU and the O-RU.

The M-plane is a concept that represents a non-real-time management operation for the O-RU. The non-real-time management operation may be executed bidirectionally by O-RU and O-RU controllers, and the O-RU controller may reside in the O-DU or a service management and orchestration system (SMO), or may exist as a separate device.

An M-plane interface is a link between the O-RU controller and the O-RU to exchange non-real-time management information.

The section type is a delimiter of a C-plane message format and consists of different data fields depending on the purpose, such as scheduling format, beamforming information configuration format, ACK/NACK instruction response, and LAA information exchange.

Section extension data is optional additional information attached to the end of section data in a C-plane message that mainly flow from the O-DU to the O-RU, and

may transmit additional real-time control information to achieve optimization or support objectives that cannot be achieved in a normal configuration format.

A shared cell may represent a method in which a plurality of O-RUs operate as being included in an identical cell with one or a plurality of component carriers.

The O-DU and the O-RU may be classified according to the presence or absence of a plurality of network elements and links (or data flow) as shown in Table 1 below.

[Table 1]

| Cell type classification according to the number and configuration of DU and RU | | | | | |
|---|---|---|---|---|---|
| **Cell type** | **1** | **2A** | **2B** | **3** | **4** |
| Terms | Cell | Shared Cell | Shared Cell | Shared O-RU | Shared Cell, Shared O-RU |
| DU | 1 | 1 | 1 | 2 or more | 2 or more |
| RU | 1 | 2 or more | 2 or more | 1 | 2 or more |
| Uplan--DL | Single link | Copy | Copy | Single link | Hybrid |

(continued)

| Cell type classification according to the number and configuration of DU and RU | | | | | |
|---|---|---|---|---|---|
| Cell type | 1 | 2A | 2B | 3 | 4 |
| Uplan--UL | Single link | Combine | Multi-link | Single link | Hybrid |

Starting from the premise of an acceptable configuration without additional implementation and major changes to the UE, basically, the UE does not distinguish between shared cells and non-shared cells and recognizes them as existing cells. Therefore, regardless of the cell type, the identity of a cell is maintained as one. When a cell is configured with a plurality of O-RUs, an excellent propagation environment may be provided by minimizing interference between radio signals such as a broadcasting channel such as System information block (SIB) 1 and a control channel such as group common PDCCH provided as a single layer within the cell.

However, in a shared cell, some signals, such as synchronization signal (SS)/physical broadcast channel (PBCH) and channel state information-reference signal (CSI-RS), may be allocated to O-RUs individually or in groups to support position and selective operation. Therefore, individual O-RUs in a shared cell are not intended to always behave the same.

In terms of O-DU, cell type 2A (shared cell) has basically the same operating principle as cell type 1. However, due to the configuration of a plurality of O-RUs, differences occur in expected performance of a cell and requirements for cell configuration. In terms of radio signal quality, there is an increase in noise power proportional to the number of O-RUs in a UL signal. In terms of message handling, like cell type 1, all network entities are processed as a single message, and thus, a function of copying a DL directional message and combining an UL directional message in the middle of a link between the O-DU and the O-RU is required. Here, combining may be a concept that includes expressions such as sum, aggregate, and add. In O-RAN, a fronthaul multiplexer (FHM) or cascade O-RU is defined as a network node responsible for the function.

In an FHM mode, a shared cell may be configured to deploy an FHM function between at least one O-DU and a plurality of O-RUs. The FHM function may perform copy and combine functions, and like a general O-RU, may also support an LLS fronthaul. Here, combine may include expressions such as combine, sum, aggregate, and add. A plurality of O-RUs connected to the FHM may all share one cell, and may be designed to be divided into multiple cells and shared by group.

As an example, a cascade mode may be configured in such a way that there is one O-RU directly connected to the O-DU and other O-RUs are connected in series to the O-RU.

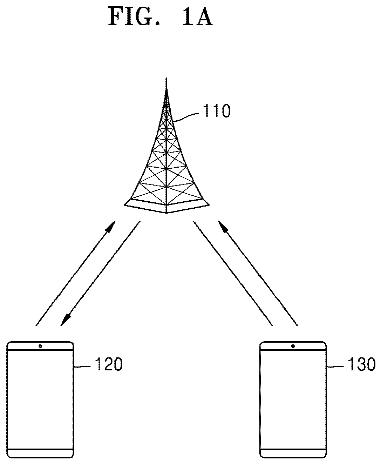

FIG. 1A is a view of a wireless communication system according to various embodiments. FIG. 1A illustrates a base station 110, a first terminal 120, and a second terminal 130 as some of nodes that use a wireless channel in the wireless communication system. FIG. 1A shows only one base station, but other base stations identical or similar to the base station 110 may be further included.

The base station 110 is a network infrastructure that provides radio access to the terminals 120 and 130. The base station 110 has coverage defined as a certain geographic area based on a distance over which signals can be transmitted. The base station 110 may be referred to as "access point (AP)", "eNodeB (eNB)", "5th generation node (5G node)", "next generation nodeB (gNB)", "wireless point", "transmission/reception point (TRP)", or other terms with equivalent technical meaning.

Each of the terminals 120 and 130 is a device used by a user and communicates with the base station 110 through a wireless channel. A link from the base station 110 to the first terminal 120 or the second terminal 130 is called a downlink (DL), and a link from the first terminal 120 or the second terminal 130 to the base station 110 is called an uplink (UL). In addition, the first terminal 120 and the second terminal 130 may communicate with each other through a wireless channel. In some cases, at least one of the first terminal 120 and the second terminal 130 may be operated without user involvement. In other words, at least one of the first terminal 120 and the second terminal 130 is a device that performs machine type communication (MTC) and may not be carried by a user. Each of the first terminal 120 and the second terminal 130 may be referred to as "user equipment (UE)", "customer premises equipment (CPE)", "mobile station", "subscriber station", "remote terminal", "wireless terminal", "electronic device", "user device", or other terms having equivalent technical meaning.

Conventionally, in a communication system with a relatively large cell radius of base stations, each base station is installed to include functions of a digital processing unit (or digital unit (DU)) and a radio frequency (RF) processing unit (or radio unit (RU)). However, as higher frequency bands are used in 4th generation (4G) and/or later communication systems and the cell radius of base stations becomes smaller, the number of base stations to cover a specific area increases, and an installation cost burden on an operator to install the increased number of base stations increases. In order to minimize an installation cost of a base station, a structure has been proposed in which a DU and an RU of a base station are split, one or more RUs are connected to one DU through a wired network, and one or more geographically distributed RUs are deployed to cover a specific area.

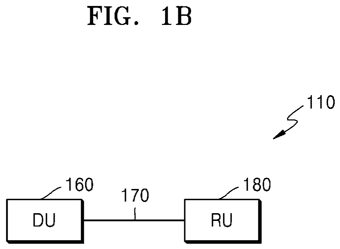

FIG. 1B is a view illustrating an example of a fronthaul structure according to a functional split of a base station, according to various embodiments. A fronthaul refers to a link between entities between a wireless LAN and the base station, unlike a backhaul between the base station and a core network.

Referring to FIG. 1B, the base station 110 may include a DU 160 and an RU 180. A fronthaul 170 between the DU 160 and the RU 180 may be operated through an Fx interface. For operation of the fronthaul 170, for example, an interface such as enhanced common public radio interface (eCPRI) or radio over Ethernet (ROE) may be used.

As communication technology develops, mobile data traffic increases, and accordingly, a bandwidth requirement for a fronthaul between a DU and an RU increases significantly. In deployment such as a centralized/cloud radio access network (C-RAN), the DU may be implemented to perform functions for packet data convergence protocol (PDCP), radio link control (RLC), media access control (MAC) and physical (PHY), and the RU may be implemented to further perform functions for a PHY layer in addition to an RF function.

The DU 160 may be responsible for an upper layer function of a wireless network. For example, the DU 160 may perform a function of an MAC layer and a portion of the PHY layer. A portion of the PHY layer is performed at a higher level from among the functions of the PHY layer and may include, for example, channel encoding (or channel decoding), scrambling (or descrambling), modulation (or demodulation), or layer mapping (or layer demapping). According to an embodiment, when the DU 160 complies with an O-RAN standard, the DU 160 may be referred to as an O-RAN DU (O-DU). The DU 160 may be represented as a replacement for a first network entity for a base station (e.g., gNB) in embodiments of the disclosure, as needed.

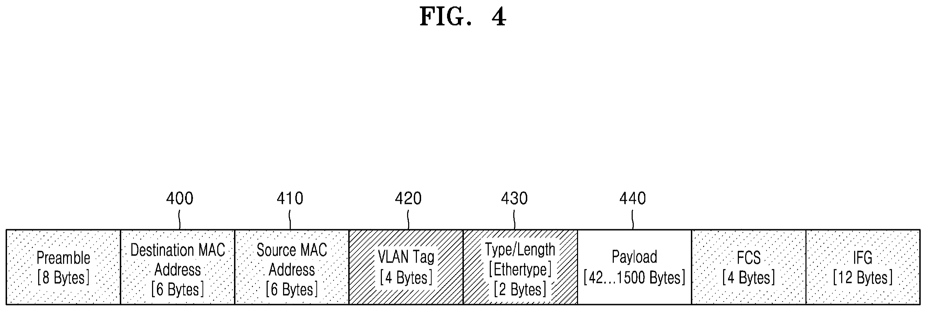

The RU 180 may be responsible for a lower layer function of a wireless network. For example, the RU 180 may perform a portion of the PHY layer and an RF function. Here, a portion of the PHY layer is performed at a relatively lower level than the DU 160 from among the functions of the PHY layer and may include, for example, IFFT conversion (or FFT conversion), CP insertion (CP removal), and digital beamforming. An example of this specific functional split will be described in detail in FIG. 4. The RU 180 may be referred to as "access unit (AU)", "access point (AP)", "transmission/-reception point (TRP)", "remote radio head (RRH)", "radio unit (RU)", or other terms having equivalent technical meaning. According to an embodiment, when the RU 180 complies with an O-RAN standard, the RU 180 may be referred to as an O-RAN RU (O-RU). The DU 180 may be represented as a replacement for a second network entity (e.g., another FHM) for a base station (e.g., gNB) in embodiments of the disclosure, as needed.

In fronthaul communication between the DU 160 and the RU 180, the RU 180 needs to continuously perform radio transmission and reception specified in 3GPP TS within an error range specified for time and frequency resources (e.g., frequency time error, time alignment error, etc.). To this end, timing and latency of the network infrastructure are managed for each network element, and in particular, DU and RU that handle physical layer signal processing require strict timing control and high accuracy. Because functional split option 7 performs signal processing on a per-symbol basis, IQ data corresponding to each symbol and its processing information need to be transferred between the DU 160 and RU 180 before certain latency. A message arrival point in time may have a relationship as shown in the formula below, which is determined by a transmission point in time and delay time.

$$\text{Transmission point in time (window)} + \text{delay time} \leq \text{arrival point in time (window)}$$

$$\text{Transmit window} + \text{transport delay} \leq \text{receive window}$$

Usually, there is a DU's fixed timing processing method that secures a sufficient margin for transmission delay based on timing of the RU 180, and a DU's dynamic timing processing method that takes advantage of an additional time secured by varying timing of message transmission and reception for a fronthaul transmission delay. The processing method is determined by the DU 160 because it depends on a message timing management capability of the DU 160. Because it is generally advantageous for the RU 180 to process in the shortest period of time with optimal resources, the RU 180 provides a delay profile according to a certain standard. This standard may be sub-carrier spacing, a bandwidth, a fronthaul (FH) line rate, a buffer depth, a transport flow, etc. Because there are too many parameters between the DU 160 and the RU 180 for delay management of messages, optimization based on consultation between vendors based on use cases is generally expected, rather than a convergence process based on general requirements and relationships. Even if a dynamic timing processing method of the DU 160 is used, this means a dynamic change according to a use case and deployment, and does not mean a dynamic change to a delay that changes dynamically in an already configured cell. It is possible to expand the method to respond semi-statically while accompanied by service deterioration, but there is currently no significant advantage.

O-RAN message timing is managed so that the DU 160 and RU 180 may transmit and receive data smoothly in relation to a transport delay. A UL combining function of a U-plane message for FHM and Cascade O-RU may operate based on ta3-prime-max based on current reference timing tul=0. Ta3-prime-max may be determined by considering Ta4-max and FH transport delay in the DU.

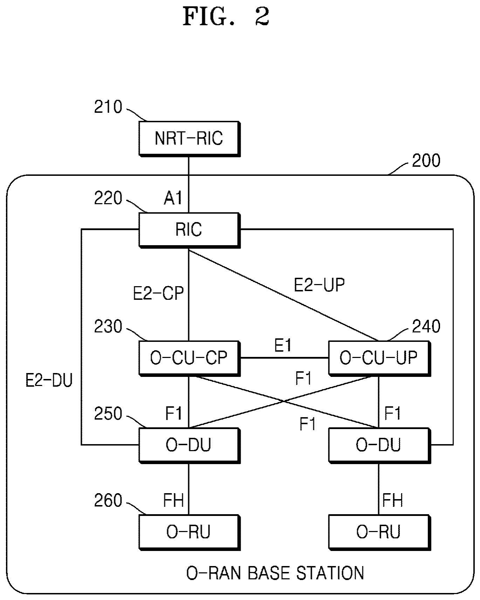

FIG. 2 is a view of an O-RAN network system according to an embodiment. According to FIG. 2, an O-RAN network is a network that logically splits functions of eNB and gNB of existing 4G and 5G systems, and may be defined as a non-real-time (NRT)-RAN intelligent controller (RIC) 210, an RIC 220 within an O-RAN base station 200, O-CU-CP 230, O-CU-UP 240, O-DU 250, O-RU 260, etc. in an O-RAN related standard. The NRT-RIC 210 is a logical node that enables non-real-time control, optimization of RAN elements and resources, model training and updates, etc. The RIC 220 is a logical node that centrally deploys servers in one physical location and enables near-real-time control and optimization of RAN elements and resources based on data collected from the O-DU 250, the O-CU-CP 230, the O-CU-UP 240, etc. through an E2 interface. The O-CU including the O-CU-CP 230 and the O-CU-UP 240 is a logical node that provides functions of radio resource control (RRC), service data adaptation protocol (SDAP), and packet data convergence protocol (PDCP). The O-CU-CP 230 is a logical node that provides functions of a C-plane portion of the RRC and PDCP, and the O-CU-UP 240 is a logical node that provides functions of a U-plane portion of the SDAP and PDCP. The O-CU-CP 230 may be connected to an access and mobility management function (AMF) included in a 5G network (5G core) and an NGAP interface. The O-DU 250 is a logical node that provides functions ofRLC, MAC, and high physical layer (high-PHY), and the O-RU 260 connected to the O-DU 250 is a logical node that provides functions of the lower physical layer and RF processing. In FIG. 2, each logical node is shown as a single logical node, but a plurality of logical nodes are also possible. For example, a plurality of O-RUs 260 may be connected to one O-DU 250, and a plurality of O-DUs 250 may be connected to one O-CU-UP 240.

The disclosure is not limited by the name of each node described above, and the configuration of the disclosure may be applied to any logical node or entity that performs the functions described above. In addition, the logical node may be physically located in the same location or a different location, and its function may be provided by the same physical device (e.g., processor, control unit, etc.) or a different physical device. For example, at least one of the functions of the logical node described above may be provided through virtualization in one physical device. Hereinafter, an O-DU may be expressed interchangeably with a DU, and an O-RU may be expressed interchangeably with an RU.

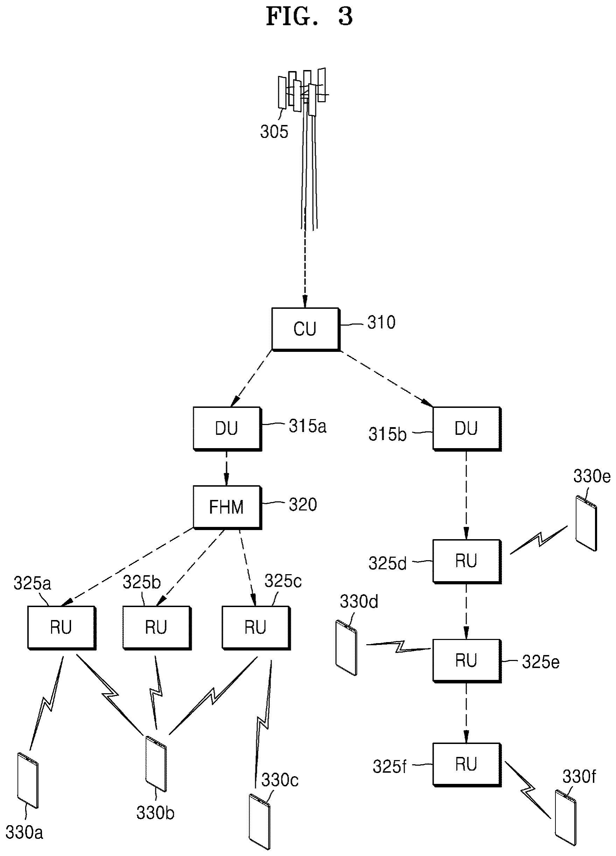

FIG. 3 is a view of a structure of an O-RAN wireless communication system according to an embodiment. The wireless communication system may include a base station 305 and at least one of UEs 330a, 330b, ..., 330f. The base station may include a CU 310, at least one of DUs 315a and 315b, an FHM 320, and at least one of RUs 325a, 325b, ..., 325f. The CU, DUs, FHM, and RUs may all be included in a base station or exist as entities with separate functions.

In an embodiment, the wireless communication system may be a radio access network (RAN) such as an O-RAN. The RAN may include connection between UE and a network including a base station. The O-RAN may include all of functions and components within the RAN and may interoperate with other functions or components. Like a traditional RAN structure, the O-RAN may also use a CU/DU split structure. An RU may generally have functions for transmitting, receiving, amplifying, and digitizing a radio frequency signal. In an embodiment, the RU may be located near an antenna and a DU. A CU may be located closer to a core network. An FHM may serve as an interface between the RU and the DU, and may multiplex or demultiplex information received from the RU before providing information to the DU. The CU 310, DU, FHM, and RU may be expressed as O-CU, O-DU, O-FHM, and O-RU, respectively.

In an O-RAN architecture, a shared cell structure may include the RU combining an I/Q sample to an incoming sample before transmitting the I/Q sample from the RU to the DU. In the O-RAN architecture utilizing a CU/DU split, the structure may be defined in two modes.

A first mode is an FHM mode, and the FHM 320 may retrieve compressed information along with the I/Q sample through signaling from all of the O-RUs 325a, 325b, and 325c connected to the FHM 320. A plurality of O-RUs are connected to the FHM, and each RU may be associated with one or more UEs or perform wireless communication.

A second mode may be defined as a cascade mode (or a cascade O-RU mode). The cascade O-RUs 325d and 325e may retrieve compressed information along with the I/Q sample through messaging from a southbound node O-RU (e.g., a trailing O-RU or downstream O-RU). An upstream O-RU may perform combining to transmit the I/Q sample to the next RU or DU.

FIG. 4 is a view of a structure of an Ethernet message according to an embodiment. A destination MAC address 400 in a header of the Ethernet message may indicate a public address of an RU in the case of DL, and may indicate a public address of a specific port of a channel card of a DU (the channel card may perform an MAC layer operation responsible for scheduling, a high-PHY operation, and an operation to convert a data format according to an interface between the RU and the DU) in the case of UL. A source MAC Address 410 may indicate the RU in the case of UL, and may indicate a public address of a specific port of the channel card of the DU in the case of DL.

A virtual LAN (VLAN) Tag 420 has a size of 4 bytes and allows management of C-plane, U-plane, or S-plane messages by mapping them to respective VLAN tags. A tag protocol identifier (TPID) included in the VLAN Tag 420 may be set to 16 bits and may be set to a value of 0x8100 to identify a frame as an IEEE 802.1Q tag frame. This field is located in the same position as that of an Ethertype/Length field in an untagged frame, so it can be used to distinguish an untagged frame from regular frames. Tag control information (TCI) included in the VLAN Tag may also be set to 16 bits and may include the following three fields. Priority code point (PCP) is 3 bits and may express priority of frames. A drop eligible indicator (DEI) may be set to 1 bit and is used separately or in combination with the PCP, and identifies frames that are desirable to be removed when traffic becomes congested. A VLAN identifier (VID) may be set to 12 bits and is a field that indicates which frame a VLAN belongs to. All values except reserved values 0x000 and 0xFFF may be used as VLAN identifiers, and up to 4,094 VLANs may be allowed. The reserved value 0x000 indicates that the frame does not belong to any VLAN. In this case, 802.1Q only specifies a priority and this priority may be referenced as a priority tag. Because Type/Length (Ethertype) is for eCPRI, it can be set to a fixed value of 0xAEFE.

A payload 440 may include a message according to each plane format, including an eCPRI header, as shown in FIG. 4. Content of each field or information of the Ethernet message described in relation to FIG. 4 does not necessarily have to be included all fields, and the disclosure may be performed by omitting the content or/and adding other fields as necessary.

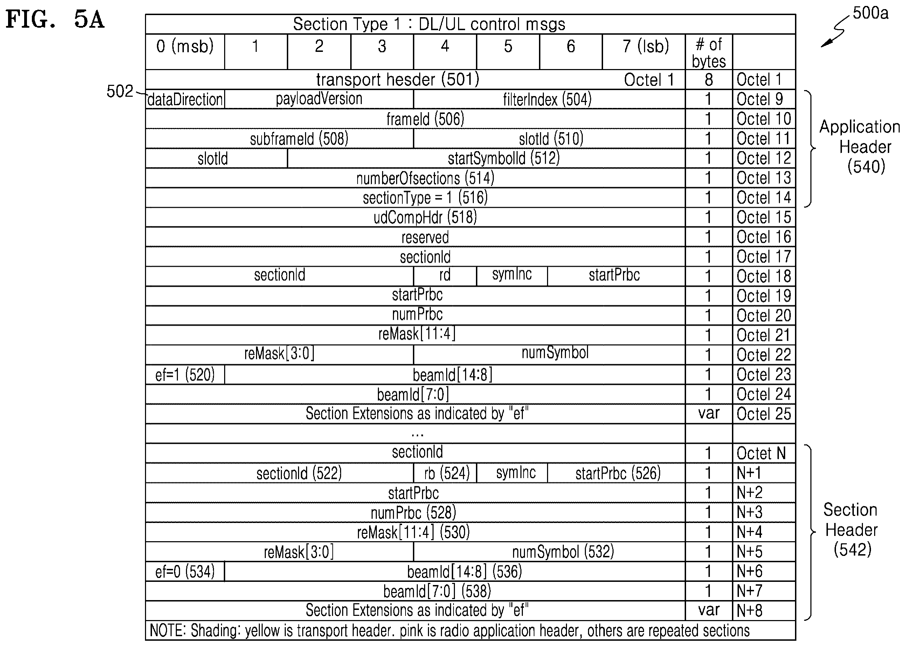

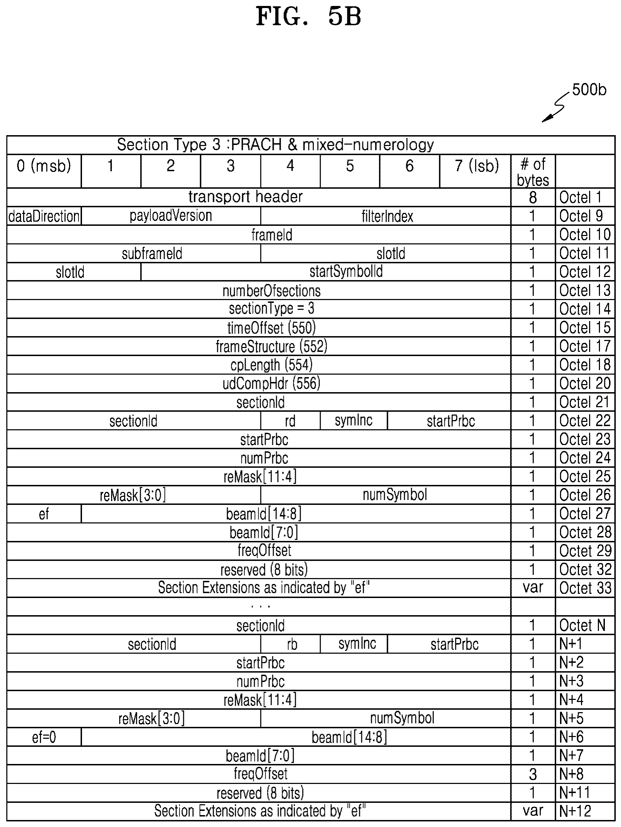

FIGS. 5A and 5B are views illustrating an example of a C-plane message according to an embodiment. FIG. 5A may show a C-plane structure of section type 1, and FIG. 5B may show a C-plane structure of section type 3.

First, looking at each field in FIG. 5A, transport header 501 may include an eCPRI header shown in FIG. 4 or information according to IEEE-1914.3. dataDirection 502 indicates a direction of a U-Plane message, wherein 0 may indicate UL and 1 may indicate a DL. filterIndex 504 indicates a channel filter of an RU and may be set to 0x1. frameId 506 may indicate a specific frame in units of 10 ms. SubframeId 508 may indicate a specific subframe in units of 1 ms within a corresponding frame. slotId 510 may indicate a specific slot within a corresponding frame.

numberOfsections 514 may indicate the number of sections indicated by a corresponding message. In the case of SectionType 516, one C-plane message may have only one section type. In this example, the SectionType 516 may indicate section type 1. udCompHdr 518 may indicate an IQ bit width (bit) and a compression method for IQ data in all sections of a corresponding message. In more detail, upper 4 bits may be iqWidth, indicating 1 to 16 bits, and lower 4 bits may be compMeth, indicating a compression method. 502 to 518 described above are an application header 540 that can be commonly applied to a corresponding message, and may be included in a similar structure in all C-plane messages.

A C-plane message of section type 1 may include information about an arbitrary section. SectionID 522 indicates an ID of the section, which may be used to match a C-plane message and a U-plane message. rb 524 indicates which PRB is used, wherein 0 may indicate that all PRBs are used, and 1 may indicate that one PRB (every other PRB) is used. StartPrbc 526 is used to indicate the first PRB of a corresponding section, and numPrbc 528 may indicate the number of PRBs in a corresponding section. reMask 530 is a bit pattern that indicates an RE (or subcarrier) corresponding to a specific beam in a corresponding PRB, and different beams may be applied within one PRB through reMask. numSymbol 532 may indicate the number of symbols corresponding to the section. The fields described above may be referred to as a section header 542 for each section.

In addition, the C-plane message may include section extension, and whether or not the section extension is included may be indicated by ef 520. Content of each field or information described in relation to FIG. 5A does not necessarily have to be included all fields, and the disclosure may be performed by omitting the content or/and adding other fields as necessary.

Referring to FIG. 5B, transport header to sectionType are the same as in FIG. 5A, but there is a difference in the next field. Timeoffset 550, frame structure 552, cpLength 554, and udCompHdr 556 are fields that can be checked in C-plane of section type 3. Timeoffset 550 defines a time offset from the start of a slot to the start of a cyclic prefix (CP). Framestructure 552 defines a frame structure, where the first 4 bits define the size of FFT/iFFT used for processing all IQ data associated with a C-plane message, and the remaining 4 bits define subcarrier spacing (SPS) and the number of slots per 1 ms subframe. cpLength 554 indicates a length of the cyclic prefix. udCompHdr 556 defines a compression method and an in-phase and quadrature (IQ) bitwidth for user data in a data section. Because most of the other fields are similar to those in FIG. 5A, their description will be omitted.

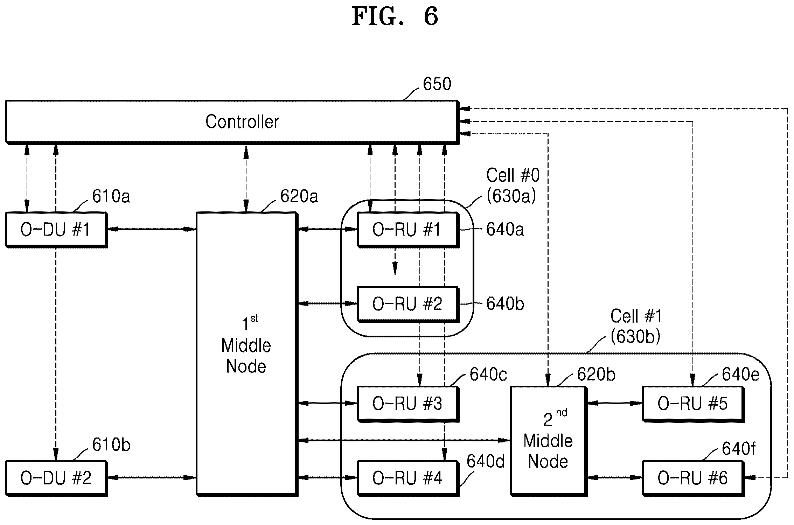

FIG. 6 is a view of a structure of an O-RAN base station including a middle node according to an embodiment of the disclosure.

Referring to FIG. 6, an O-RAN base station (or network) 600 may include at least one of O-DUs 610a and 610b, middle nodes 620a and 620b, at least one of O-RUs 640a, 640b, ..., 640f, and a controller 650.

The at least one of O-DUs 610a and 610b may also be called a northbound node centered on the first middle node 620a. The middle nodes 620a and 620b may be used interchangeably with an FHM 620a, a cascade FHM (not shown), or a cascade O-RU 620B. The at least one of O-RUs 640a, 640b, ..., 640f may be used interchangeably with a southbound node centered on the first middle node 620a. The controller 650 may have functions included in the O-DUs 610a and 610b, or may exist as a separate device.

Referring to FIG. 6A, the controller 650 may perform direct communication with the at least one of O-DUs 610a and 610b, the middle nodes 620a and 620b, and the at least one of O-RUs 640a, 640b, ..., 640f. The controller 650 may communicate an M-plane message with the at least one of O-DUs 610a and 610b. The controller 650 may communicate an M-plane message with the middle nodes 620a and 620b. The at least one of O-DUs 610a and 610b may communicate a C/U-Plane message with the middle node 620a. The at least one of O-DUs 610a and 610b may communicate a C/U-Plane message directly with the at least one of O-RUs 640a, 640b, ..., 640f. The middle node may communicate with at least one O-RU included in at least one of cells (cell #0 and cell #1) 630a and 630b. The first middle node 620a may transmit the M-plane and C/U-plane messages received from the at least one of O-DUs 610a and 610b or the controller 650 to the at least one of O-RUs 640a, 640b, ..., 640f. At this time, the first middle node 620a may copy an identical message and transmit it to O-RUs included in each of the cells. For example, an identical message may be copied from the first middle node 620a and transmitted to the O-RU #1 640a and the O-RU #2 640b included in the cell #0 630a, respectively. In addition, different messages may be transmitted to the cell #0 630a and the cell #1 630b from the first middle node 620a, respectively. According to an embodiment, the second middle node 620b may be included inside the cell #1 630b. In this case, the second middle node 620b may include an O-RU southbound from the second middle node 620b, and may copy and transmit a message sent from an upper level to the O-RU. For example, the cell #1 630b includes the second middle node 620b, and the second middle node 620b may copy and transmit data received from the first middle node 620a to the O-RU #5 640e and the O-RU #6 640f located southbound.

Referring to FIG. 6, the at least one of O-RUs 630a, 630b, ..., 640f may transmit a U-plane message to the first middle node 620a based on data received from a terminal. The first middle node 620a may combine messages received from the at least one of O-RUs 630a, 630b, ..., 640f. Here, the term "combine" may include expressions such as combine, sum, aggregate, and add. The first middle node 620a may combine messages received from the at least one of O-RUs 630a, 630b, ..., 640f and transmit them to the at least one of O-DUs 610a and 610b. At this time, the first middle node 620a may perform combining on data received from O-DUs included in an identical cell. According to an embodiment, the middle node 620b may be included inside the cell 630b. In this case, the second middle node 620b includes an O-RU southbound from the second middle node 620b, and may combine messages received from the O-RU and transmit them to an upper level. For example, according to a cascade structure in the cell #1 630b, the second middle node 620b may combine data received from the O-RU #5 640e and the O-RU #6 640f located at a lower level and transmit the data to the first middle node 620a at an upper level. Here, the term "combine" may include expressions such as combine, sum, aggregate, and add. The first middle node 620a may combine data received from the second middle node 620b and data received from the O-RU #3 640c and the O-RU #4 640d included in the cell #1 630b and transmit the data to the O-DUs 610a and 610b.

In the present disclosure, a north node may be a concept that includes all of DU, O-DU, O-RU controller, service management and orchestration (SMO), and another middle node (e.g., an FHM, an FHM consecutive with a cascade RU, or a cascade RU), and may be a single entity that logically or physically includes all functions, or an entity that is separated into each function. A south node may be a concept that includes RU, O-RU or another middle node (e.g., an FHM, an FHM consecutive with a cascade RU, or a cascade RU), and may be a single entity that logically or physically includes all functions, or an entity that is separated into each function.

In the technical field related to O-RAN, a problem has occurred in which some messages are missing in actual message transmission. The reasons for this include late transmission at a transmitting entity, late reception due to a large transmission delay due to a long optical fiber distance, missing timing-related settings, a misconfiguration of user plane messages, and network congestion, which is a bottleneck. Therefore, to solve the problem, a method of defining a reception window (Rx-window) and using a counter corresponding to it has been proposed. However, there is a problem that the reception window counter is not suitable for FHM in a shared cell because it is based on wireless delay parameters. Because an FHM is not wireless and delay parameters for copying or combining are not defined or insufficient, there is a problem that calculations for various ports become complicated. In particular, a shared cell may include various extended topologies such as multiple O-DUs, multiple entities, and cascaded FHM, which may further increase the complexity. Therefore, a counter capable of checking the performance available in a middle node is proposed to solve these problems.

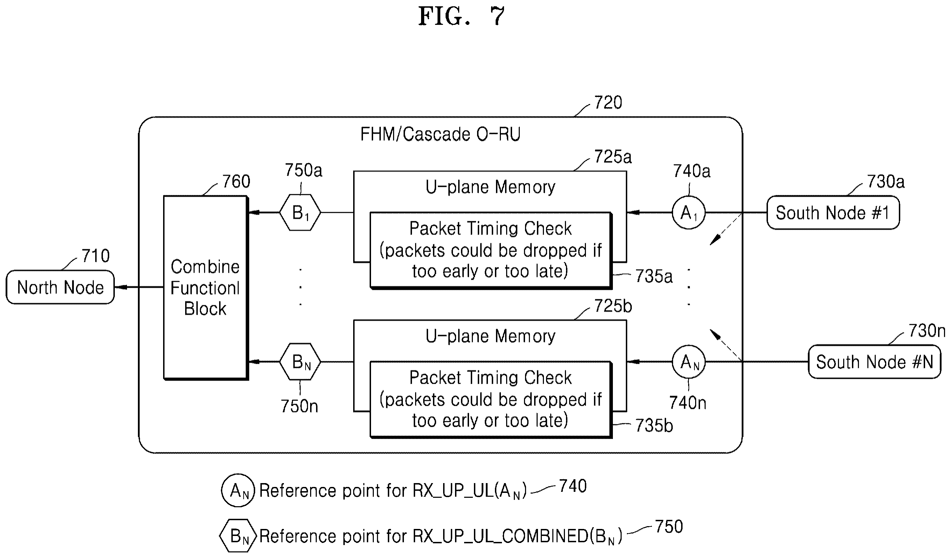

FIG. 7 is a view of a system including a counter in an uplink according to an embodiment of the present disclosure.

A north node (or northbound node) 710 of FIG. 7 may be the same as or similar to the controller 650, the DUs 315a and 315b, or the O-DUs 610a and 610b of FIGS. 1A to 6. A middle node (FHM/Cascade O-RU) 720 may be the same as or similar to the FHM 320, the RUs 325d and 325e, or the middle nodes 620a and 620b of FIGS. 1A to 6. South nodes (or southbound nodes) 730a and 730n may be the same as or similar to the RUs 325a, 325b, 325c, 325d, 325e, and 325f or the O-RUs 640a, 640b,..., 640f in FIGS. 1A to 6.

The middle node 720 of FIG. 7 may function as an FHM or Cascade O-RU. FIG. 7 may illustrate a process in which the middle node 720 receives an uplink message from the south nodes 730a and 730n in an uplink situation, combines uplink packets, and transmits a combined message to the north node 710.

Referring to FIG. 7, the first south node 730a may transmit an uplink message to the middle node 720. Here, the uplink message may include an uplink control plane message or a user plane message. The nth south node 730n may also transmit an uplink message to the middle node 720. After receiving an uplink message from the south nodes 730a and 730n, the middle node 720 may identify a source media access control (MAC) or Internet protocol (IP) (hereinafter, MAC/IP) address and a destination MAC/IP address, and an extended antenna-carrier (eAxC) identifier (ID) from packets included in the received message. Here, the MAC/IP address and the destination MAC/IP address may be referred to as a transport flow.

The middle node 720 may identify a packet in which the destination MAC/IP address is the middle node 720 among the received packets. Here, a packet in which the destination MAC/IP address is not the middle node 720 may be transmitted to the north node 710 without undergoing a combining process at the middle node 720.

The middle node 720 may determine whether an eAxC ID of packets in which the destination MAC/IP address is the middle node 720 is the same as an eAxC ID included in predetermined information. Here, the predetermined information may be included in an M-plane message received from the north node 710. The north node 710 may transmit an M-plane message including predetermined information for specifying packets to be combined to the middle node 720. For example, the predetermined information may appear as "shared-cell-combine-entities" within the M-plane. The "shared-cell-combine-entities" may include a source MAC/IP address, destination MAC/IP address, and eAxC ID of a packet to be combined. The middle node 720 may check a packet in which the eAxC ID is the same as the predetermined information from among the packets in which the destination MAC/IP address is the middle node 720 and store the packet in memories 725a and 725b. The middle node 720 may drop a packet in which the eAxC ID is different from the predetermined information from among the packets in which the destination MAC/IP address is the middle node 720.

The middle node 720 may determine and count the number of packets in which the eAxC ID is the same as the predetermined information from among the packets in which the destination MAC/IP address is the middle node 720. At this time, values of uplink counters 740a and 740n may be determined based on the counting. For example, the uplink counters 740a and 740n may be identified as an "RX_UP_UL" counter. In an embodiment, a value of an uplink counter may be determined in units of transport flow (e.g., south node MAC/IP address). The uplink counter may indicate processing elements set in a shared cell and the number of user plane packets received in an uplink data direction corresponding to the eAxC ID. For example, in an uplink message received from the first south node 730a, if the number of packets in which the eAxC ID is the same as the predetermined information is 5 from among the packets in which the destination MAC/IP address is the middle node 720, the middle node 720 may determine the first uplink counter 740a as 5. In an uplink message received from the nth south node 730n, if the number of packets in which the eAxC ID is the same as the predetermined information is 3 from among the packets in which the destination MAC/IP address is the middle node 720, the middle node 720 may determine the nth uplink counter 740n as 3. The middle node 720 may determine an uplink counter and store non-dropped messages among received packets in the memories 725a and 725b. For example, the middle node 720 may determine an uplink counter for a message received from the first south node 730a and store non-dropped messages among received packets in the first memory 725a. The middle node 720 may determine an uplink counter for a message received from the nth south node 730n and store non-dropped messages among received packets in the second memory 725b. Here, the first memory 725a and the second memory 725b may be one memory, or may exist as separate memories.

In operation 735a, the middle node 720 may check packet timing when storing a packet in a memory. The middle node 720 may determine certain timing and check a time at which the packet arrived. The middle node 720 may drop the packet if it arrives too early or too late than the certain timing. In an embodiment, the middle node 720 may store all received packets in a memory, and may drop packets that arrive too early or too late according to a set cycle in the memory.

The middle node 720 may call packets to be combined at combining timing from among the packets stored in the memory to a combiner 760. For example, the middle node 720 may call packets corresponding to a symbol to be combined at combining timing from among packets stored in the first memory 725a. The middle node 720 may determine an uplink combining counter by counting the number of packets for a corresponding symbol called at T-waiting timing from among packets sent out from the memory. Here, the uplink combining counter may be identified as an "RX_UP_UL_COMBINED" counter. In an embodiment, a value of the uplink combining counter may be determined in units of transport flow (e.g., south node MAC/IP address). Alternatively, the value of the uplink combining counter may be determined in detail down to an eAxC-ID unit. The uplink combining counter may indicate a user plane message of "RX_UP_UL" to be processed by a combining function to generate a combined message for a north node corresponding to processing elements and an eAxC ID set in a shared cell. The uplink combining counter may indicate the number of user plane messages in an uplink direction carried to a combiner to generate a combined message transmitted to the north node. For example, the middle node 720 may call packets for combining with symbol #0 from packets stored in the first memory 725a among packets received from the first south node 730a, and if the number of the packets is 3, a first uplink combining counter 750a may be determined as 3. For example, the middle node 720 may call packets for combining with symbol #0 from packets stored in the second memory 725b among packets received from the nth south node 730n, and if the number of the packets is 2, an nth uplink combining counter 750n may be determined as 2. In an embodiment, if the value of the uplink counter 740a and the value of the uplink combining counter 750a are the same, it can be interpreted that all uplink user plane messages are combined. However, the values of the uplink counter 740a and the uplink combining counter 750a may differ depending on calculation timing. This difference may be caused by a time from storage to processing or a difference in reference timing for measuring each packet counter. Therefore, the two counters may be synchronized by setting this reference timing to T-waiting.

The middle node 720 may perform combining at the combiner 760 by calling packets that have the same symbol as that of packets to be combined from among the packets received from the first south node 730a and the packets received from the nth south node 730n. The middle node 720 may transmit a message including the combined packets to the north node 710 after performing the combining.

According to an embodiment, the north node or the middle node may determine that messages of a specific transport flow for uplink combining are continuously missing (or received but not processed by the combiner) based on an increasing difference in the size of the nth uplink counter 740n and the nth uplink combining counter 750n.

According to an embodiment, the north node or the middle node may determine whether some messages for uplink combining are missing when both the south nodes 730a and 730n transmit the same number of user plane messages per control plane message.

According to an embodiment, the north node or middle node may interpret or determine that if values of the first uplink combining counter 750a to the nth uplink combining counter 750n are all the same, this indicates that no messages are missing in any of the transport flows, or that the same number of messages are missing in each of the transport flows.

According to an embodiment, the north node or the middle node may determine that some messages are missing at a certain time and other messages are combined by arriving on time when the values of the uplink combining counters are different.

According to an embodiment, when the values of the first uplink combining counter 750a and the nth uplink combining counter 750n are the same, the same number of packets may be combined in both. In this case, the north node or the middle node may determine that if combining is successful on one port, combining is successful on all other ports. However, there may be cases where the number of user plane packets is different. For example, there may be an optional beam-id function operation, or there may be user plane responses from different vendors for an identical control plane packet.

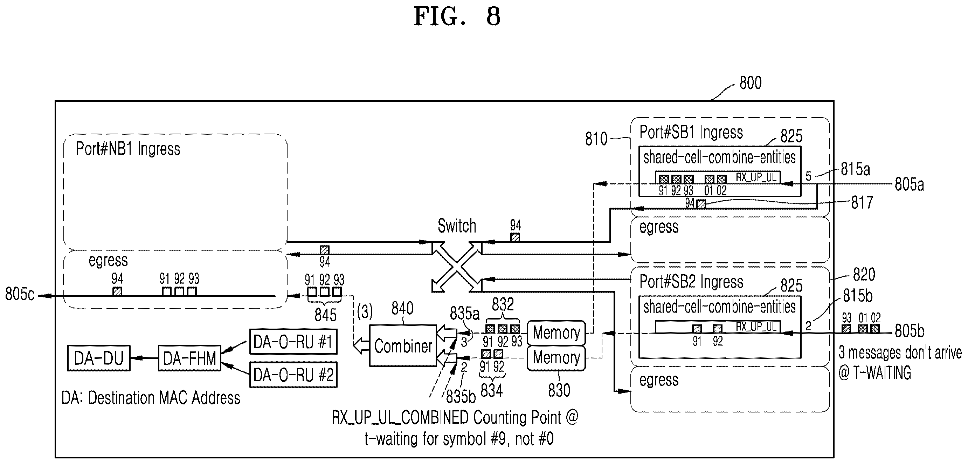

FIG. 8 is a view of a flow of messages for performing combining in a middle node according to an embodiment of the present disclosure.

A north node (not shown) of FIG. 8 may be the same or similar to the controller 650, the DUs 315a and 315b, the O-DUs 610a and 610b, or the north node 710 of FIGS. 1A to 7. A middle node (FHM/Cascade O-RU) 800 may be the same as or similar to the FHM 320, the RUs 325d and 325e, the middle nodes 620a and 620b, or the middle node 720 of FIGS. 1A to 7. A south node (not shown) may be the same as or similar to the RUs 325a, 325b, 325c, 325d, 325e, and 325f, the O-RUs 640a, 640b,..., 640f, or the south nodes 730a and 730n in FIGS. 1A to 7.

FIG. 8 may illustrate an example of a flow of messages and packets in a system including the counter in the uplink described in FIG. 7.

Referring to FIG. 8, the middle node 800 may receive uplink user plane messages from a plurality of south nodes (not shown). First, the middle node 800 may receive a first uplink user plane message (hereinafter, a first uplink message) 805a from a first south node at a first port 810. For example, the first uplink message 805a may include a total of six packets, 91, 92, 93, 94, 01, and 02.

The middle node 800 may receive information 825 indicating a packet to be combined in a shared cell from the north node (not shown) in advance through a management plane message. The information indicating a packet to be combined in a shared cell may include a transport flow and an eAxC ID of the packet to be combined. For example, the information indicating a packet to be combined in a shared cell may be identified as "shared-cell-combine-entities". Here, the transport flow may include a source MAC/IP address and a destination MAC/IP address. The middle node 800 may identify the transport flow and the eAxC ID in the received first uplink message 805a.

The middle node 800 may determine whether the destination MAC/IP address is the middle node 800 based on the information 825 indicating a packet to be combined in a shared cell for the packets included in the received first uplink message 805a. The middle node 800 may transmit packets 817 in which the destination MAC/IP address is not the middle node 800 to the north node without separately storing them. For example, packet 94 of the first port 810 may correspond to the packets 817 in which the MAC/IP address is not the middle node 800.

When packets in which the destination MAC/IP address is the middle node 800 are determined, the middle node 800 may check whether an eAxC ID of the packets in which the destination MAC/IP address is the middle node 800 corresponds to a predetermined eAxC ID in the information indicating a packet to be combined in a shared cell. The middle node 800, when the eAxC ID of the packets does not correspond to the predetermined eAxC ID, may drop the packets. When the eAxC ID of the packets in which the destination MAC/IP address is the middle node 800 corresponds to the predetermined eAxC ID, the middle node 800 may count the number of the packets to determine a value of an uplink counter. Here, the uplink counter may be identified as an "RX_UP_UL" counter. For example, an uplink counter value in the first uplink message 805a may be determined as 5 815a according to a total of 5 packets, 91, 92, 93, 01, and 02.

When the eAxC ID of the packets in which the destination MAC/IP address is the middle node 800 corresponds to the predetermined eAxC ID, the middle node 800 may store the packets in a memory 830. For example, the first port 810 may store packets 91, 92, 93, 01, and 02 in the memory 830.

In addition, the middle node 800 may receive a second uplink user plane message (hereinafter, second uplink message) 805b from a second south node in a second port 820. For example, the second uplink message 805b may include a total of five packets, 91, 92, 93, 01, and 02. However, in FIG. 8, only two packets, 91 and 92, are received by the middle node 800 within T-waiting timing, and packets 93, 01, and 02 may not be received by the middle node 800 within the timing.

The middle node 800 may receive the information 825 indicating a packet to be combined in a shared cell from the north node (not shown) in advance through the management plane message. The middle node 800 may identify the transport flow and the eAxC ID in the received second uplink message 805b. The middle node 800 may determine whether the destination MAC/IP address is the middle node 800 based on the information 825 indicating a packet to be combined in a shared cell for the packets included in the received second uplink message 805b. The middle node 800 may transmit packets in which the destination MAC/IP address is not the middle node 800 to the north node without separately storing them. For example, the second port 820 may not have any packets transmitted directly to the north node.

When the eAxC ID of the packets in which the destination MAC/IP address is the middle node 800 corresponds to the predetermined eAxC ID, the middle node 800 may count the number of the packets to determine an uplink counter value. For example, an uplink counter in the second uplink message 805b may be determined as 2 815b according to a total of 2 packets, 91 and 92.

When the eAxC ID of the packets in which the destination MAC/IP address is the middle node 800 corresponds to the predetermined eAxC ID, the middle node 800 may store the packets in the memory 830. For example, the second port 820 may store packets 91 and 92 in the memory 830.

The middle node 800 may call packets 832 and 834 to be combined according to combining timing of each symbol in the memory 830 to a combiner 840. For example, the middle node 800 may call packets 91, 92, and 93 832 received and stored from the first uplink message 805a to perform combining with symbol #9, and may call packets 91 and 92 834 received and stored from the second uplink message 805b to the combiner 840.

The middle node 800 may perform counting on packets called for combining for each symbol to determine uplink combining counters 835a and 835b. Here, an uplink combining counter may be identified as "RX_UP_UL_COMBINED". For example, because the middle node 800 called three packets, 91, 92, and 93, received from the first uplink message 805a and stored, the first uplink combining counter 835a may be 3 at the T-waiting timing. In addition, because the middle node 800 called two packets, 91 and 92, received from the second uplink message 805b and stored, the second uplink combining counter 835b may be 2 at the T-waiting timing. At this time, the memory may store packets 01 and 02 that were received at identical timing from the first uplink message 805a.

The middle node 800 may combine the called packets in the combiner 840, and transmit combined packets 845 to the north node according to timing by including the combined packets 845 in a third uplink message 805c. At this time, the middle node 800 may transmit uncombined packets together by including them in the third uplink message 805c.

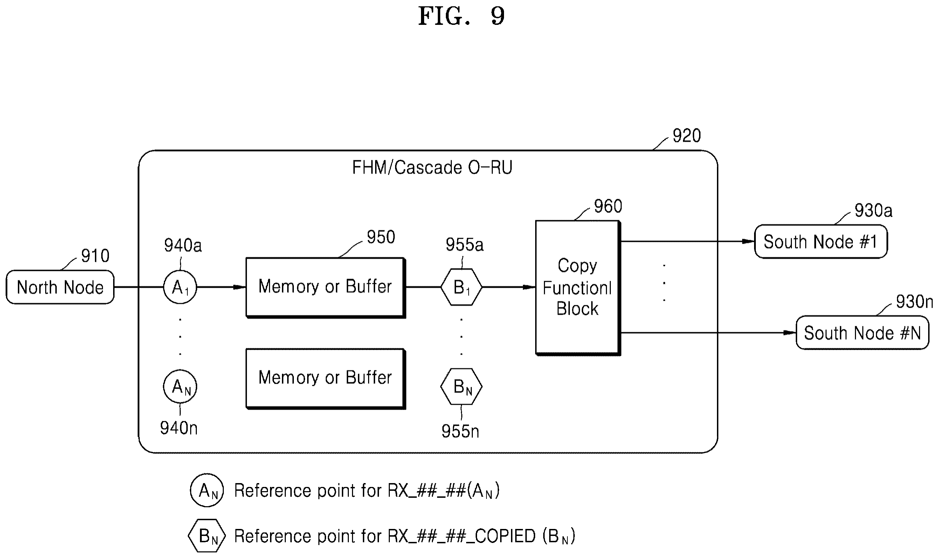

FIG. 9 is a view of a system including a counter in a downlink according to an embodiment of the present disclosure.

A north node 910 of FIG. 9 may be the same or similar to the controller 650, the DUs 315a and 315b, the O-DUs 610a and 610b, or the north node 710 of FIGS. 1A to 8. A middle node (e.g., FHM/Cascade O-RU) 920 may be the same as or similar to the FHM 320, the RUs 325d and 325e, or the middle nodes 620a, 620b, 720, and 800 of FIGS. 1A to 8. South nodes 930a and 930n may be the same as or similar to the RUs 325a, 325b, 325c, 325d, 325e, and 325f, the O-RUs 640a, 640b,..., 640f, or the south nodes 730a and 730n in FIGS. 1A to 8.

The middle node 920 of FIG. 9 may function as an FHM or Cascade O-RU. FIG. 9 may illustrate a process in which the middle node 920 receives a downlink message from the north node 910 in a downlink situation, copies (or duplicates) downlink packets, and transmits a copied message to the south nodes 930a and 930n.

Referring to FIG. 9, the north node 910 may transmit the downlink message to the middle node 920. Here, the downlink message may include a downlink control plane message or a user plane message. When receiving the downlink message from the north node 910, the middle node 920 may identify a source MAC/IP address, a destination MAC/IP address, and an eAxC ID for packets included in the received message. Here, the MAC/IP address and the destination MAC/IP address may be referred to as a transport flow.

The middle node 920 may identify packets in which the destination MAC/IP address is the middle node 920 among the received packets. Here, a packet in which the destination MAC/IP address is not the middle node 920 may be transmitted to the south nodes 930a and 930n without undergoing a copy process at the middle node 920.

The middle node 920 may determine whether the eAxC ID of packets in which the destination MAC/IP address is the middle node 920 is the same as the eAxC ID included in predetermined information. Here, the predetermined information may be included in an M-plane message received from the north node 910. The north node 910 may transmit an M-plane message including predetermined information for specifying packets to be copied to the middle node 920. For example, the predetermined information may appear as "shared-cell-copy-entities" within the M-plane. The "shared-cell-copy-entities" may include a source MAC/IP address, destination MAC/IP address, and eAxC ID of a packet to be copied. The middle node 920 may check a packet in which the eAxC ID is the same as the eAxC ID included in the predetermined information from among the packets in which the destination MAC/IP address is the middle node 920 and store the packet in a memory 950. Alternatively, the packet may be transmitted directly to a copier 960 without being stored in the memory. The middle node 920 may drop a packet in which the eAxC ID is different from the predetermined information from among the packets in which the destination MAC/IP address is the middle node 920.

The middle node 920 may determine and count the number of packets in which the eAxC ID is the same as the eAxC ID included in the predetermined information from among the packets in which the destination MAC/IP address is the middle node 920. At this time, the number of downlink counters 940a and 940n may be determined based on the counting. For example, the downlink counters 940a and 940n may be identified as an "RX_XX_XX" counter. The downlink counters 940a and 940n may exist in multiple forms. The "RX_XX_XX" counter may include "RX_UP_DL" indicating counting of user plane packets of a downlink, "RX_CP_UL" indicating control plane counting to be used in an uplink, and "RX_CP_DL" indicating control plane counting to be used in the downlink. For example, in a downlink user plane message received from the north node 910, if the number of packets in which the eAxC ID is the same as the predetermined information is 4 from among the packets in which the destination MAC/IP address is the middle node 920, the middle node 920 may determine a downlink user plane counter ("RX_UP_DL") as 4. Furthermore, in a downlink control plane message received from the north node 910, if the number of packets in which the eAxC ID is the same as the predetermined information is 2 from among the packets in which the destination MAC/IP address is the middle node 920, the middle node 920 may determine a downlink control plane counter ("RX_CP_DL") as 2. Furthermore, in a control plane message to be used in the uplink received from the north node 910, if the number of packets in which the eAxC ID is the same as the predetermined information is 3 from among the packets in which the destination MAC/IP address is the middle node 920, the middle node 920 may determine an uplink control plane counter ("RX_CP_UL") as 3.

The middle node 920 may determine the downlink counters 940a and 940n and store non-dropped messages among received packets in the memory 950. For example, the middle node 920 may determine a downlink counter for a message received from the north node 910 and store non-dropped messages among received packets in the memory 950.

The middle node 920 may call packets to be copied at copy timing from among packets stored in the memory to the copier 960. For example, the middle node 920 may call packets corresponding to a symbol to be copied at copy timing from among packets stored in the memory 950. The middle node 920 may determine downlink copy counters 955a and 955n by counting the number of packets for a corresponding symbol called at copy timing from among packets sent out from the memory. Here, the downlink copy counters 955a and 955n may be identified as an "RX_XX_XX_COPIED" counter. The downlink copy counters 955a and 955n may indicate the number of packets of a user plane message or a control plane message in a downlink direction carried to a copier to generate a copy message transmitted to a south node. For example, the middle node 920 may call a downlink user plane packet to copy packets stored in the memory 950 from among packets received from the north node 910, and if the number of corresponding packets is 4, a downlink user plane copy counter ("RX_UP_DL_COPIED") may be determined as 4. Furthermore, the middle node 920 may call a downlink control plane packet to copy packets stored in the memory 950 from among packets received from the north node 910, and if the number of corresponding packets is 2, a downlink user plane copy counter ("RX_CP_DL_COPIED") may be determined as 2. Furthermore, the middle node 920 may call a control plane packet to be used for uplink to copy packets stored in the memory 950 from among packets received from the north node 910, and if the number of corresponding packets is 3, a downlink user plane copy counter ("RX_CP_UL_COPIED") may be determined as 3.

The middle node 920 may call a packet received from the north node 910 and perform a copy on the copier 960. After performing the copy, the middle node 920 may transmit a message including the copied packet and uncopied packets destined for a corresponding south node to a first south node 930a and the nth south node 930n.

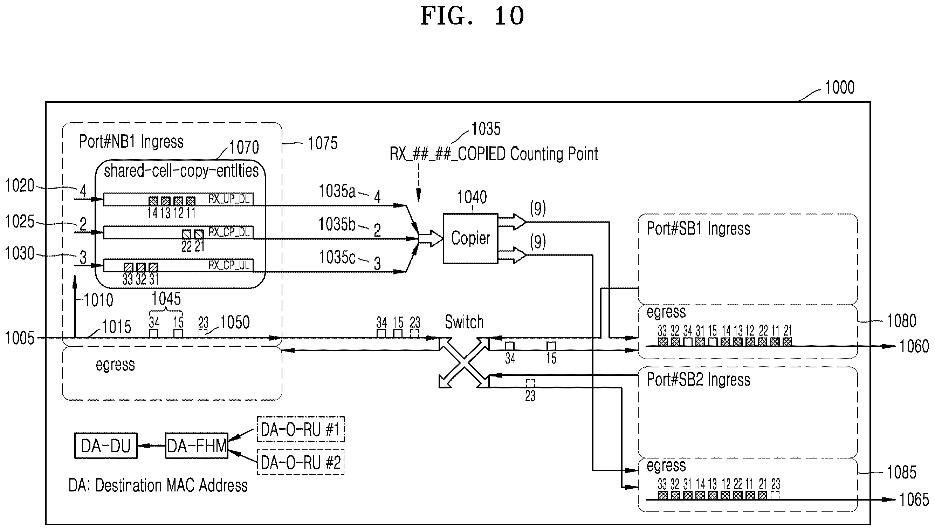

FIG. 10 is a view of a flow of messages for performing copying in a middle node according to an embodiment of the present disclosure.

A north node (not shown) of FIG. 10 may be the same or similar to the controller 650, the DUs 315a and 315b, the O-DUs 610a and 610b, or the north nodes 710 and 910 of FIGS. 1A to 9. A middle node (e.g., FHM/Cascade O-RU) 1000 may be the same as or similar to the FHM 320, the RUs 325d and 325e, and the middle nodes 620a, 620b, 720, 800, and 920 of FIGS. 1A to 9. A south node (not shown) may be the same as or similar to the RUs 325a, 325b, 325c, 325d, 325e, and 325f, the O-RUs 640a, 640b,..., 640f, or the south nodes 730a, 730n, 930a, and 930n in FIGS. 1A to 9.

FIG. 10 may illustrate an example of a flow of messages and packets in a system including various types of counters in the downlink described in FIG. 9.

Referring to FIG. 10, the middle node 1000 may receive a downlink user plane message or a control plane message from a north node (not shown). First, the middle node 1000 may receive a downlink message 1005 from the north node at a first port 1075. For example, the downlink message 1005 may include a total of 9 packets, 11, 12, 13, 14, 21, 22, 31, 32, and 33.

The middle node 1000 may receive information 1070 indicating a packet to be copied and transmitted from the north node (not shown) to a south node included in a shared cell in advance through a management plane message. The information indicating a packet to be copied and transmitted to the shared cell may include a transport flow and an eAxC ID of the packet to be copied. For example, the information indicating a packet to be copied and transmitted to the shared cell may be identified as "shared-cell-copy-entities". Here, the transport flow may include a source MAC address and a destination MAC address of the packet. The middle node 1000 may identify the transport flow and the eAxC ID in the received downlink message 1005.

The middle node 1000 may determine whether a destination MAC/IP address is the middle node 1000 based on the information 1070 indicating which of the packets included in the received downlink message 1005 need to be copied and transmitted to the south node included in the shared cell. The middle node 1000 may transmit packets 1015 in which the destination MAC/IP address is not the middle node 1000 to a south node with the destination MAC/IP address set without separately storing them. For example, in the first port 1075, packets 23, 15, and 34 may correspond to packets in which the destination MAC/IP address is not the middle node 1000. In particular, packets 15 and 34 may be a packet 1045 in which the destination MAC/IP address is a first south node, and packet 23 may be a packet 1050 in which the destination MAC/IP address is a second south node.

When packets in which the destination MAC/IP address is the middle node 1000 are determined, the middle node 1000 may check whether an eAxC ID of the packets in which the destination MAC/IP address is the middle node 1000 corresponds to a predetermined eAxC ID in the information 1070 indicating packets to be copied and transmitted to a shared cell. The middle node 1000, when the eAxC ID of the packets does not correspond to the predetermined eAxC ID, may drop the packets. When the eAxC ID of the packets in which the destination MAC/IP address is the middle node 1000 corresponds to the predetermined eAxC ID, the middle node 1000 may count the number of the packets to determine a downlink counter. Here, the downlink counter may be identified as an "RX_XX_XX" counter. The "RX_XX_XX" counter may include "RX_UP_DL" indicating a counter 1020 of a user plane packet of a downlink, "RX_CP_UL" indicating a control plane counter 1025 to be used in an uplink, and "RX_CP_DL" indicating a control plane counter 1030 to be used in the downlink. For example, the user plane counter ("RX_UP_DL") 1020 of the downlink in the downlink message 1005 may be determined as 4 according to the total of 4 packets, 11, 12, 13, and 14. The control plane counter ("RX_CP_UL") 1025 to be used in the uplink in the downlink message 1005 may be determined as 2 according to the total of 2 packets, 21 and 22. The control plane counter ("RX_CP_DL") 1030 to be used in the downlink in the downlink message 1005 may be determined as 3 according to the total of 3 packets, 31, 32 and 33.

The middle node 1000 may call packets to be copied to a copier 1040. For example, the middle node 1000 may call the packets to be combined into a downlink user plane packet, a downlink control plane packet, and a control plane packet to be used in the uplink.

The middle node 1000 may determine a copy counter 1035 by performing counting on packets to be input to the copier 1040 just before input to generate a copied message to be transmitted to the south node. Here, the copy counter may be identified as "RX_XX_XX_COPIED". For example, because the middle node 1000 called the copier 1040 for a total of 4 packets, 11, 12, 13, and 14, which are downlink user plane packets that were decided to be copied in the downlink message 1005, to the copier 1040, a downlink user plane copy counter 1035a may be 4. Furthermore, because the middle node 1000 called the copier 1040 for a total of 2 packets, 21 and 22, which are downlink control plane packets that were decided to be copied in the downlink message 1005, a downlink control plane copy counter 1035b may be 2. In addition, because the middle node 1000 called the copier 1040 for a total of 3 packets, 31, 32, and 33, which are control plane packets to be used in the uplink that were decided to be copied in the downlink message 1005, an uplink control plane copy counter 1035c may be 3.

The middle node 1000 may copy the called packets from the copier 1040 and include the copied packets in a first downlink message 1060 at a second port 1080 to transmit them to the first south node (not shown). Furthermore, the middle node 1000 may copy the called packets from the copier 1040 and include the copied packets in a second downlink message 1065 at a third port 1085 to transmit them to the second south node (not shown). At this time, packets 1045 and 1050 that were not combined may be transmitted together by including them in the downlink messages 1060 and 1065, respectively.

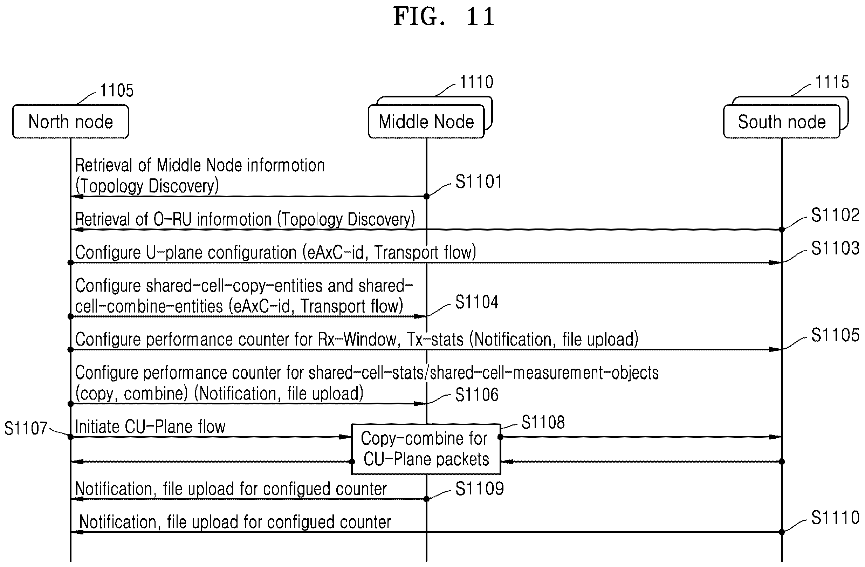

FIG. 11 is a flowchart illustrating a method of determining and reporting a performance counter according to an embodiment of the present disclosure.

Operations described in FIG. 11 may be operations performed in the north node, middle node, and south node described in FIGS. 1A to 10, respectively. A north node 1105 of FIG. 11 may be the same or similar to the controller 650, the DUs 315a and 315b, the O-DUs 610a and 610b, or the north nodes 710 and 910 of FIGS. 1A to 10. A middle node (e.g., FHM/Cascade O-RU) 1110 may be the same as or similar to the FHM 320, the RUs 325d and 325e, and the middle nodes 620a, 620b, 720, 800, and 920 of FIGS. 1A to 10. A south node 1115 may be the same as or similar to the RUs 325a, 325b, 325c, 325d, 325e, and 325f, the O-RUs 640a, 640b,..., 640f, or the south nodes 730a, 730n, 930a, and 930n in FIGS. 1A to 10.

The north node of FIG. 11 may include a plurality of nodes. Here, the north node may exist for each of a user plane, a control plane, a synchronization plane, and a management plane. Each north node may be logically configured and may integrate O-RU controller, DU, O-DU, SMO, etc. (e.g., a hierarchical mode), and also O-RU controller, SMO, DU, O-DU may be separated from each other and function as separate devices.

In operation S1101, the north node 1105 may request and receive information of the middle node from the middle node 1110. The information of the middle node may include a configuration of topology. For example, the north node 1105 may request and receive information about the middle node 1110, information about the south node 1115 connected to the middle node 1110, information about a shared cell, and information about an eAxC ID related to the shared cell from the middle node 1110.

In operation S1102, the north node 1105 may request and receive information about the south node from at least one south node 1115. The information about the south node may include a configuration of topology. For example, the north node 1105 may request and receive information about the south node 1115, information about a shared cell, and information about an eAxC ID related to the shared cell.

In operation S1103, the north node 1105 may generate U-Plane configuration information based on the middle node and at least one south node capability information received in operations S1101 and S1102 and transmit the U-plane configuration information to the middle node 1110 and at least one south node 1115. The U-plane configuration information may be transmitted via a management plane message.

In operation S1104, the north node 1105 may set information for specifying packets to be copied and information for specifying packets to be combined and transmit the information to the middle node 1110. The information for specifying packets to be copied and information for specifying packets to be combined may be transmitted via a management plane message. The information for specifying packets to be combined may be identified as "shared-cell-combine-entities" in the management plane message. The information for specifying packets to be combined may include a source MAC/IP address, a destination MAC/IP address, and an eAxC ID of the packets to be combined. The information for specifying packets to be copied may be identified as "shared-cell-copy-entities" in the management plane message. The information for specifying packets to be copied may include a source MAC/IP address, a destination MAC/IP address, and an eAxC ID of the packets to be copied.

In operation S1105, the north node 1105 may set a performance counter to at least one south node 1115. Here, the performance counter may be transmitted to at least one south node 1115 via a control plane message. The performance counter may include a counter for a reception window (Rx-Window) and a counter for transmission statistics (Tx-stats).

The counter for the reception window may include counters as shown in Table 2 below.

[Table 2]

| measurement-object |
| --- |
| RX_ON_TIME |
| RX_EARLY |
| RX_LATE |
| RX_CORRUPT |
| RX_TOTAL |
| RX_ON_TIME_C |
| RX_EARLY_C |
| RX_LATE_C |
| RX_SEQID_ERR |
| RX_SEQID_ERR_C |
| RX_ERR_DROP |

RX_ON_TIME is a counter indicating the number of data packets received on time (a reception window defined by delay parameters) within "Rx-window-measurement-interval".

RX_EARLY is a counter indicating the number of data packets received too early than the "Rx-window-measurement-interval".

RX_LATE is a counter indicating the number of data packets received too late than the "Rx-window-measurement-interval".

RX_CORRUPT is a counter indicating the number of corrupted packets or packets with incorrect headers received within the "Rx-window-measurement-interval".

RX_TOTAL is a counter indicating the total number of packets (data and control) received within the "Rx-window-measurement-interval".

RX_ON_TIME_C is a counter indicating the number of control packets received on time within the "Rx-window-measurement-interval".

RX_EARLY_C is a counter indicating the number of control packets received too early than the "Rx-window-measurement-interval".

RX_LATE_C is a counter indicating the number of control packets received too late than the "Rx-window-measurement-interval".

RX_SEQID_ERR is a counter indicating the number of data packets received with an incorrect sequence ID within the "Rx-window-measurement-interval".

RX_SEQID_ERR_C is a counter indicating the number of control packets received with an incorrect sequence ID within the "Rx-window-measurement-interval".

RX_ERR_DROP is a counter indicating the total number of inbound messages dropped by an O-RAN entity for any reason within the "Rx-window-measurement-interval".

The counter for transmission statistics may include counters as shown in Table 3 below.

[Table 3]

| measurement-object |
| --- |
| TX TOTAL |
| TX_TOTAL_C |

TX_TOTAL is a counter indicating the number of outbound packets (data and control) transmitted within the "Tx-measurement-interval".

TX_TOTAL_C is a counter indicating the number of outbound control packets transmitted within the "Tx-measurement-interval" and may be used only when an RU supports an LAA/LBT function.

When setting a performance counter on at least one south node 1115, the north node 1105 may send a message setting a method for reporting the performance counter to the north node 1105. First, the performance counter may be set to report in a notification method. In the case of the notification method, it can be a method that instructs the north node 1105 to transmit information about a performance counter determined during a measurement interval periodically at a certain interval (e.g., a notification interval) or when an event occurs. Second, the performance counter may be set to report in a file upload method. The file upload method may be a method in which a performance counter determined during a measurement interval at a certain time (e.g., at given upload timing) is transmitted in the form of a file to a memory of the north node or a separate storage server at a given upload interval. In the notification method, the north node may identify and utilize information received from the middle node immediately, while in the file upload method, information is stored in the form of a file and can be viewed and checked as needed.

In operation S1106, the north node 1105 may configure a shared cell performance counter measurement object and a report format to be delivered to the middle node 1110. The shared cell performance counter measurement object and the report format may be delivered as a management plane message and may be identified as "performance-measurement-objects" and "shared-cell-stats". Furthermore, the configuration of the shared cell performance counter measurement object may include information about a counter measurement interval in a shared cell. The counter measurement interval may indicate a period for measuring a shared cell copy performance counter and a shared cell combining performance counter. The configuration of the shared cell performance counter measurement object may include information indicating a reporting method after measuring a counter value. According to an embodiment, the reporting method may include a notification method or a file upload method. The shared cell performance counter may include information indicating a notification interval in the notification method and an upload interval in the file upload method. The shared cell performance counter may include the shared cell copy performance counter and the shared cell combining performance counter. The shared cell copy performance counter may include a downlink counter and a downlink copy counter. The downlink counter, which is an "RX_XX_XX" counter, may be identified as "RX_UP_DL" indicating counting of user plane packets of a downlink, "RX_CP_UL" indicating control plane counting to be used in an uplink, and "RX_CP_DL" indicating control plane counting to be used in the downlink. The downlink copy counter may be identified as "RX_XX_XX_COPIED" counters, respectively. The downlink copy counters may include a user plane downlink copy counter ("RX_UP_DL_COPIED"), a control plane downlink copy counter ("RX_CP_DL_COPIED"), and a user plane uplink copy counter ("RX_CP_UL_COPIED"). The shared cell combining performance counter may include an uplink counter and an uplink combining counter. The uplink counter may be identified as an "RX_UP_UL" counter. The uplink counter may indicate processing elements set in a shared cell and the number of user plane packets received in an uplink data direction corresponding to the eAxC ID. The uplink combining counter may be identified as an "RX_UP_UL_COMBINED" counter. The uplink combining counter may indicate processing elements set in a shared cell and a user plane message of "RX_UP_UL" to be processed by a combining function to generate a combined message to a north node corresponding to the eAxC ID.

In operation S1107, when the setting is completed, the north node 1105 may transmit and receive a user plane message and a control plane message with the middle node 1110 and at least one south node 1115. Here, the north node 1105 may be a concept distinct from the node that transmitted the management plane message. A management function that transmits a management plane message may not transmit and receive a user plane message or a control plane message. In this case, the north node 1105 that transmits and receives the user plane message or the control plane message with the middle node 1110 and the south node 1115 may represent a node that does not include a management function.

In operation S1108, the middle node 1110 may perform a copy process for downlink data according to set information and measure a downlink counter, and may perform a combining process for uplink data and measure an uplink counter. The copy process performed by the middle node 1110 may be the same as or similar to the copy process described in FIGS. 9 and 10. The combining process performed by the middle node 1110 may be the same as or similar to the combining process described in FIGS. 7 and 8.

In operation S1109, the middle node 1110 may transmit the measured counters to the north node 1105 according to a set method and timing. The middle node 1110 may transmit the measured downlink counter and uplink counter to the north node 1105 based on the set method and timing. The north node 1105 may store or use a value of the received counters to determine performance based on the set method.

In operation S1110, at least one south node 1115 may transmit the measured counters to the north node 1105 according to the set method and timing. At least one south node 1115 may transmit a measured reception window counter and transmission statistics counter to the north node 1105 based on the set method and timing.

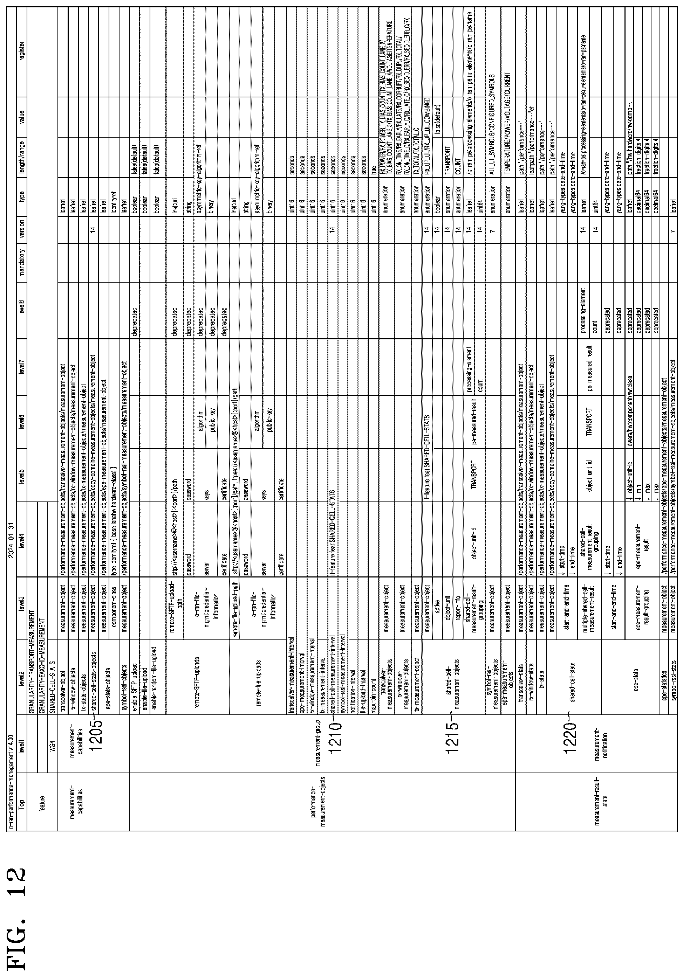

FIG. 12 is a view of a performance management part in a Yang model according to an embodiment of the present disclosure.

Referring to FIG. 12, in the Yang model, a configuration of an O-RAN performance-management part may be confirmed. The O-RAN performance-management part may be largely classified into three parts: measurement capabilities of O-RU and FHM (measurement capabilities), configuration of performance measurement objects (performance-measurement-objects), and configuration of notification subscription formats (measurement-result-stats). First, in O-RAN performance management, the measurement-capabilities part may include "shared-cell-stats-objects" information 1205.

In the part of configuration of performance measurement objects, a "measurement-group" part may include "shared-cell-measurement-interval" information 1210 indicating an interval for measuring "shared-cell statistics". In addition, a notification interval and upload interval may also be included. A location and password or certificate information of a server for file upload may also be provided. "shared-cell-measurement-objects" information 1215 may include "measurement object", "active", "object-unit", "report-info", and "shared-cell-measurement-result-grouping" information.

Here, "measurement object" may specify measurement objects such as RX_UP_UL, RX_UP_UL_combined, etc., and "object-unit" is to specify a measurement unit and may specify a transport flow. Currently, only "report-info" in a count format is supported, and it can be reported or uploaded as a pe-measured-result, which consists of a transport flow (processing element) and a count thereof.

A measurement-result-stats part, a configuration of notification subscription formats, may include "shared-cell statistics" 1220. The "shared-cell-stats" 1220 is a counter, which may count numbers in units of transport flow. The transport flow may include a processing element, destination MAC/IP address, and source MAC/IP address. That is, the transport flow may be counted in units of south node or cascade O-RU.

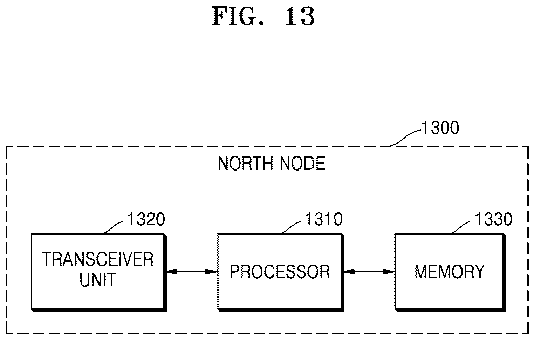

FIG. 13 is a view of a configuration of a north node according to an embodiment of the present disclosure.

A north node 1300 of FIG. 13 may be the same or similar to the controller 650, the DUs 315a and 315b, the O-DUs 610a and 610b, or the north nodes 710, 910, and 1105 of FIGS. 1A to 11.

According to an embodiment, in the north node 1300, functions may be included in one device, or each function may be divided into each device. The north node 1300 may include another middle node (e.g., an FHM, an FHM consecutive with a cascade RU, and a cascade RU), an O-RU controller, SMO, DU, and O-DU.

The north node 1300 according to an embodiment of the present disclosure may include a control device (or processor) 1310 that controls operations of the north node, a transceiver (or transceiver unit) 1320 including a transmitter and a receiver, and a memory 1330. However, the present disclosure is not limited to the above example, and the north node 1300 may include more or fewer components than those shown in FIG. 13.

According to an embodiment of the present disclosure, the transceiver unit 1320 may transmit and receive signals to and from other network nodes (e.g., a south node, O-RU, O-DU, SMO, middle node, or upper network entity). Signals transmitted and received to and from the north node may include C-plane, U-plane, S-plane and M-plane signals, uplink data, and downlink data. In addition, the transceiver unit 1320 may receive a signal through a wireless path or a wired path such as a fiber and transmit it to the processor 1310, and transmit a signal determined and output from the processor 1310.

According to an embodiment of the present disclosure, the processor 1310 may control a middle node device to perform the operation of any one of the embodiments of FIGS. 1A to 12. Meanwhile, the processor 1310, the memory 1330, and the transceiver unit 1320 do not necessarily have to be implemented as separate modules, and may be implemented as one component in the form of a single chip. In addition, the processor 1310, the memory 1330, and the transceiver unit 1320 may be electrically connected to each other. Furthermore, the processor 1310 may be an application processor (AP), a communication processor (CP), a circuit, an application-specific circuit, or at least one processor.

According to an embodiment of the present disclosure, the memory 1330 may store data such as basic programs, applications, and configuration information for the operation of the middle node 1300. In addition, the memory 1330 may store uplink and downlink data (user plane and control plane) received by the north node 1300. In particular, the memory 1330 may provide stored data in response to a request from the processor 1310. The memory 1330 may be composed of a storage medium such as read-only memory (ROM), random-access memory (RAM), hard disk, CD-ROM, and digital video disk (DVD), or a combination of storage media. In addition, there may be a plurality of memories 1330. In addition, the processor 1310 may perform the embodiments described above based on a program stored in the memory 1330 for performing the embodiments of the present disclosure described above.

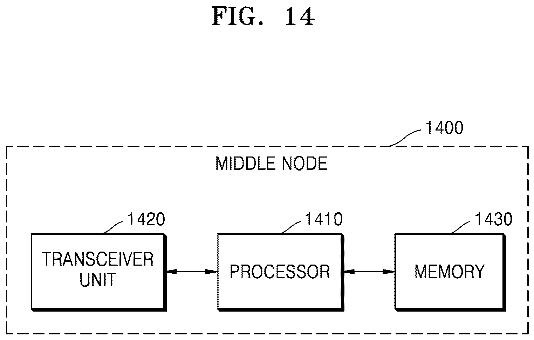

FIG. 14 is a view of a configuration of a middle node according to an embodiment of the present disclosure.

A middle node 1400 of FIG. 14 may be the same as or similar to the FHM 320, the RUs 325d and 325e, and the middle nodes 620a, 620b, 720, 800, 920, and 1110 of FIGS. 1A to 13.

According to an embodiment of the present disclosure, a middle node 1400 may include the middle node (FHM or cascade O-RU) described in FIGS. 1 to 13. In the middle node, functions may be included in one device or divided into respective devices.

The middle node 1400 according to an embodiment of the present disclosure may include a control device (or processor) 1410 that controls operations of the middle node, a transceiver (or transceiver unit) 1420 including a transmitter and a receiver, and a memory 1430. However, the present disclosure is not limited to the above example, and the middle node 1400 may include more or fewer components than those shown in FIG. 14.

According to an embodiment of the present disclosure, the transceiver unit 1420 may transmit and receive signals to and from other network nodes (e.g., south node, north node, O-DU, O-RU, RU controller, SMO, or other middle nodes). Signals transmitted and received to and from the middle node may include C-plane, U-plane, S-plane and M-plane signals, uplink data, and downlink data. In addition, the transceiver unit 1420 may receive a signal through a path such as a fiber and transmit it to the processor 1410, and transmit a signal determined and output from the processor 1410 through the path.

According to an embodiment of the present disclosure, the processor 1410 may control a middle node device to perform the operation of any one of the embodiments of FIGS. 1A to 13. Meanwhile, the processor 1410, the memory 1430, and the transceiver unit 1420 do not necessarily have to be implemented as separate modules, and may be implemented as one component in the form of a single chip. In addition, the processor 1410, the memory 1430, and the transceiver unit 1420 may be electrically connected to each other. Furthermore, the processor 1410 may be an AP, a CP, a circuit, an application-specific circuit, or at least one processor. The processor 1410 of the middle node 1400 may include a combiner, a copier, and the like to perform operations. Each function may be included in a separate device or may be included together in the processor 1410. The processor may control to perform operations of a combiner and copier.

According to an embodiment of the present disclosure, the memory 1430 may store data such as basic programs, applications, and configuration information for the operation of the middle node. In addition, the memory 1130 may store uplink and downlink data (user plane and control plane) received by the middle node. In particular, the memory 1430 may provide stored data according to a call from the processor 1410. The memory 1430 may be composed of a storage medium such as ROM, RAM, hard disk, CD-ROM, and DVD, or a combination of storage media. The memory 1430 may include at least one buffer for temporarily storing uplink data or downlink data. In addition, there may be a plurality of memories 1430. In addition, the processor 1410 may perform the embodiments described above based on a program stored in the memory 1430 for performing the embodiments of the present disclosure described above.

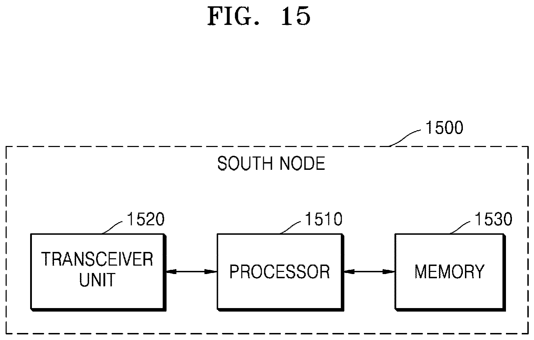

FIG. 15 is a view of a configuration of a south node according to an embodiment of the present disclosure.

A south node 1500 of FIG. 15 may be the same as or similar to the RUs 325a, 325b, 325c, 325d, 325e, and 325f, the O-RUs 640a, 640b,..., 640f, or the south nodes 730a, 730n, 930a, 930n, and 1115 in FIGS. 1A to 14.

According to an embodiment, in the south node 1500, functions may be included in one device, or each function may be divided into each device. The south node 1500 may include another middle node (e.g., an FHM, an FHM consecutive with a cascade RU, and a cascade RU), an RU, and O-RU.

The south node 1500 according to an embodiment of the present disclosure may include a control device (or processor) 1510 that controls operations of the south node, a transceiver (or transceiver unit) 1520 including a transmitter and a receiver, and a memory 1530. However, the present disclosure is not limited to the above example, and the south node 1500 may include more or fewer components than those shown in FIG. 15.

According to an embodiment of the present disclosure, the transceiver unit 1520 may transmit and receive signals to and from other network nodes (e.g., southbound node, northbound node, O-RU, controller, SMO, middle node, or upper network entity). Signals transmitted and received to and from the south node may include C-plane, U-plane, S-plane and M-plane signals, uplink data, and downlink data. In addition, the transceiver unit 1520 may receive a signal through a wireless path or a wired path such as a fiber and transmit it to the processor 1510, and transmit a signal determined and output from the processor 1510 through the path.

According to an embodiment of the present disclosure, the processor 1510 may control a south node device to perform the operation of any one of the embodiments of FIGS. 1A to 14. Meanwhile, the processor 1510, the memory 1530, and the transceiver unit 1520 do not necessarily have to be implemented as separate modules, and may be implemented as one component in the form of a single chip. In addition, the processor 1510, the memory 1530, and the transceiver unit 1520 may be electrically connected to each other. Furthermore, the processor 1510 may be an AP, a CP, a circuit, an application-specific circuit, or at least one processor.

According to an embodiment of the present disclosure, the memory 1530 may store data such as basic programs, applications, and configuration information for the operation of the south node 1500. In addition, the memory 1130 may store uplink and downlink data received by the south node. In particular, the memory 1530 may provide stored data in response to a request from the processor 1510. The memory 1530 may be composed of a storage medium such as read-only memory (ROM), random-access memory (RAM), hard disk, CD-ROM, and digital video disk (DVD), or a combination of storage media. In addition, there may be a plurality of memories 1530. In addition, the processor 1510 may perform the embodiments described above based on a program stored in the memory 1530 for performing the embodiments of the present disclosure described above.

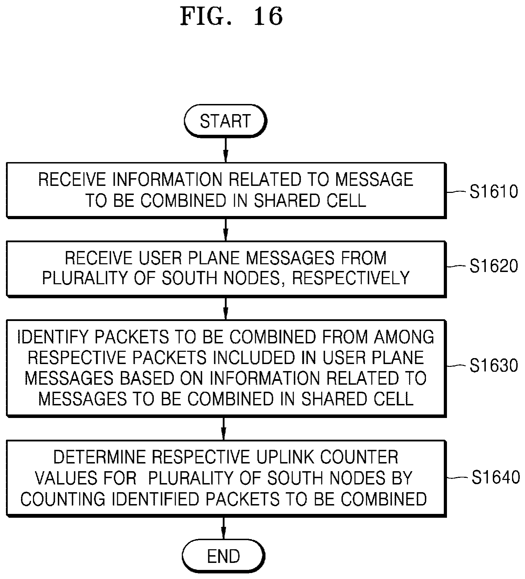

FIG. 16 is a flowchart illustrating a method of performance measurement and reporting according to an embodiment of the present disclosure.

Hereinafter, with reference to FIG. 16, a performance counter measurement method of the middle nodes described in FIGS. 1 to 15 will be summarized. Each operation is not essential for the series of processes, and only a few operations may be performed depending on the situation.

In operation S1601, a middle node (e.g., the FHM 320, RUs 325d and 325e, or the middle nodes 620a, 620b, 720, 800, 920, and 1110 in FIGS. 1A to 11) may receive information related to a message to be combined in a shared cell (e.g., information showing a packet to be combined in the shared cell of FIG. 8 or information to specify packets to be combined of FIG. 11) from a north node (e.g., the controller 650, DUs 315a and 315b, O-DUs 610a and 610b, other middle nodes, or the north nodes 710, 910, and 1105 in FIGS. 1A to 11).

Here, the information related to a message to be combined in a shared cell may include information about a transport flow and an extended antenna-carrier (eAxC) identifier (ID) of a message to be combined from among uplink messages transmitted from the plurality of south nodes (e.g., the information for specifying packets to be combined in FIG. 11), wherein the information about the transport flow may include a source media access control (MAC) or Internet protocol (IP) address and a destination MAC or IP (MAC/IP) address of the message to be combined.

In operation S1602, the middle node may receive user plane messages (e.g., the first uplink user plane message 805a and the second uplink user plane message 805b of FIG. 8) from a plurality of south nodes (e.g., the RUs 325a, 325b, 325c, 325d, 325e, and 325f, O-RUs 640a, 640b,..., 640f, other middle nodes, or the south nodes 730a, 730n, 930a, 930n, and 1115 in FIGS. 1A to 11), respectively.

In operation S1603, the middle node may identify packets to be combined based on the information related to the message to be combined in the shared cell from among respective packets included in the user plane messages.

Here, the middle node may identify the transport flow and the eAxC ID of the respective packets included in the user plane messages, may transmit, when a destination MAC/IP address of at least one first packet from among the respective packets included in the user plane messages is not an MAC/IP address of the middle node, the at least one first packet (e.g., the packets 817 in which the destination MAC/IP address is not the middle node 800 of FIG. 8) to the north node without combining, may drop, when a destination MAC address of at least one second packet from among the respective packets included in the user plane messages is an MAC/IP address of the middle node and the eAxC ID is different from an eAxC ID included in the information related to the message to be combined in the shared cell, the at least one second packet, and may identify, when a destination MAC/IP address of at least one third packet from among the respective packets included in the user plane messages is an MAC/IP address of the middle node and the eAxC ID matches an eAxC ID included in the information related to the message to be combined in the shared cell, the at least one third packet as the packets to be combined.

In operation S1604, the middle node may determine respective uplink counter values (the values of the uplink counters 740a and 740n of FIG. 7 or the uplink counter values 815a and 815b of FIG. 8) for the plurality of south nodes by counting the identified packets to be combined.

In an embodiment, the middle node may store the identified packets to be combined in a memory (e.g., the memories 725a and 725b of FIG. 7 or the memory 830 of FIG. 8), may call packets (e.g., the packets 832 and 834 of FIG. 8) related to a symbol to be combined stored in the memory at predetermined timing (e.g., the T-waiting timing of FIG. 8) to a combiner (e.g., the combiner 760 of FIG. 7 or the combiner 840 of FIG. 8), and may determine respective uplink combining counter values (e.g., the first uplink combining counter 750a and the nth uplink combining counter 750n of FIG. 7 or the uplink combining counters 835a and 835b of FIG. 8) for the plurality of south nodes by counting the called packets.

In an embodiment, the middle node may receive information (e.g., the shared cell performance counter of FIG. 11) related to a first interval (e.g., an interval in the notification method of FIG. 11) or a second interval (e.g., an interval in the file upload method of FIG. 11) for counter reporting via a control plane message from the north node, may transmit the respective uplink counter values and uplink combining counter values to the north node for each of the first interval, and may transmit the respective uplink counter values and uplink combining counter values to a memory or storage server of the north node in a file format for each of the second interval.

In an embodiment, when the respective uplink combining counter values for the plurality of south nodes are all the same, the middle node may determine that there are no missing packets in the respective user plane messages received from the plurality of south nodes or determine that the same number of packets are missing in the respective user plane messages received from the plurality of south nodes.

In an embodiment, when a difference between an uplink counter value for a first south node from among the plurality of south nodes and an uplink combining counter value for the first south node gradually increases, the middle node may determine that messages received from the first south node are continuously missing.

In an embodiment, when the respective uplink combining counter values for the plurality of south nodes are different, the middle node may determine that some messages are missing at a specific time or a different number of messages are being received.

In an embodiment, the middle node may receive configuration information for an uplink counter and respective uplink combining counters for the plurality of south nodes from the north node, wherein the configuration information for the uplink counter and the uplink combining counter may include information indicating a measurement interval of a counter (e.g., the "shared-cell-measurement-interval" 1210 in FIG. 12), information indicating an object entity to measure a counter (e.g., the "shared-cell-stats-objects" 1205 in FIG. 12), and information about a notification interval or a file upload interval for reporting a counter value.

In an embodiment, the middle node may include a fronthaul-multiplexer or a cascade radio unit, the north node may include a middle node other than the middle node above, a distributed unit, a radio unit controller, or service management and orchestration (SMO), and the plurality of south nodes may include another middle node or radio unit.

Various operations of the methods described above may be performed by any suitable means capable of performing corresponding functions. The means includes, but is not limited to, various hardware and/or software components and/or modules such as an ASIC or a processor. In general, when there are operations corresponding to the drawings, these operations may have a corresponding counterpart and functional components having the same number as the number of the counterpart.

The various illustrative logic blocks, components, or circuits described in connection with the present disclosure may be implemented or performed by a general-purpose processor designed to perform the functions disclosed herein, a digital signal processor (DSP), an ASIC, an FPGA or other programmable logic device (PLD), a discrete gate or transistor logic device, discrete hardware components, or any combination thereof. The general-purpose processor may be a microprocessor, but may alternatively be any commercially available processor, control device, microcontroller, or state machine. The processor may also be implemented in a combination of computing devices, for example, a combination of the DSP and the microprocessor, a plurality of microprocessors, one or more microprocessors in connection with a DSP core, or any other configuration.

The term "determine" includes a wide variety of actions. For example, the term "determine" may include computing, processing, deriving, examining, looking up (e.g., looking up in a table, database, or other data structure), identifying, and the like. The term "determine" may also include receiving (e.g., receiving information), accessing (accessing data in a memory), and the like. The term "determine" may also include resolving, selecting, choosing, establishing, and the like.

Numerous modifications and adaptations will be readily apparent to one of ordinary skill in the art without departing from the scope of the present disclosure.

Accordingly, the embodiments illustrated in the present disclosure are not intended to limit the inventive concept of the present disclosure but are for illustrative purposes, and the scope of the inventive concept of the present disclosure is not limited by these embodiments.

The scope of protection of the inventive concept of the present disclosure should be interpreted in accordance with the claims below, and all technical ideas within the equivalent scope should be construed as being included in the scope of inventive concept of the present disclosure.

**Claims**

1. A method performed by a middle node in a communication system, the method comprising:

   receiving a configuration message including information related to a message to be combined in a shared cell from a north node;
   receiving user plane messages from a plurality of south nodes included in the shared cell, respectively;
   identifying packets to be combined from among respective packets included in the received user plane messages based on the information related to the message to be combined in the shared cell; and
   determining respective uplink counter values for the plurality of south nodes by counting the identified packets to be combined.

2. The method of claim 1, further comprising:

storing the identified packets to be combined in a memory;
calling packets related to a symbol to be combined stored in the memory at predetermined timing to a combiner;
determining respective uplink combining counter values for the plurality of south nodes by counting the called packets.

3. The method of claim 2, further comprising:

receiving information related to a first interval or a second interval for counter reporting via a control plane message from the north node;
transmitting respective uplink counter values and uplink combining counter values for the plurality of south nodes to the north node for each of the first interval, or transmitting respective uplink counter values and uplink combining counter values for the plurality of south nodes to a memory or storage server of the north node in a file format for each of the second interval.

4. The method of claim 1,

wherein the information related to the message to be combined in the shared cell comprises information about a transport flow and an extended antenna-carrier (eAxC) identifier (ID) of a message to be combined among uplink messages to be transmitted from the plurality of south nodes, and
wherein the information about the transport flow comprises a source media access control (MAC) or Internet protocol (IP) address and a destination MAC or IP (MAC/IP) address of the message to be combined.

5. The method of claim 4, wherein the identifying of packets to be combined from among respective packets included in the received user plane messages based on the information related to the message to be combined in the shared cell comprises:

identifying the transport flow and the eAxC ID of the respective packets included in the user plane messages;
when a destination MAC/IP address of at least one first packet from among the respective packets included in the user plane messages is not an MAC/IP address of the middle node, transmitting the at least one first packet to the north node without combining;
when a destination MAC address of at least one second packet from among the respective packets included in the user plane messages is an MAC/IP address of the middle node, and the eAxC ID is different from an eAxC ID included in the information related to the message to be combined in the shared cell, dropping the at least one second packet;
when a destination MAC/IP address of at least one third packet from among the respective packets included in the user plane messages is an MAC/IP address of the middle node, and the eAxC ID matches an eAxC ID included in the information related to the message to be combined in the shared cell, identifying the at least one third packet as the packets to be combined.

6. The method of claim 2, further comprising:
when the respective uplink combining counter values for the plurality of south nodes are all the same, determining that there are no missing packets in the respective user plane messages received from the plurality of south nodes or determining that the same number of packets are missing in the respective user plane messages received from the plurality of south nodes.

7. The method of claim 2, further comprising:
when a difference between an uplink counter value for a first south node from among the plurality of south nodes and an uplink combining counter value for the first south node gradually increases, determining that messages received from the first south node are continuously missing.

8. The method of claim 2, further comprising:
when the respective uplink combining counter values for the plurality of south nodes are different, determining that some messages are missing at a specific time or a different number of messages are being received.

9. The method of claim 1, wherein

the middle node comprises a fronthaul-multiplexer or a cascade radio unit,
the north node comprises a middle node different from the middle node, a distributed unit, a radio unit controller, or service management and orchestration (SMO), and
the plurality of south nodes comprise another middle node or radio unit.

10. The method of claim 2, further comprising:

receiving configuration information for respective uplink counters and uplink combining counters for the plurality of south nodes from the north node,
wherein the configuration information for the uplink counters and the uplink combining counters comprises information indicating a measurement interval of a counter, information indicating an object entity to measure a counter, and information about a notification interval or a file upload interval for reporting a counter value.

11. A middle node in a communication system, the middle node comprising:

a transceiver;
a memory; and
at least one processor electrically connected to the transceiver and the memory,
wherein the at least one processor is configured to:

receive a configuration message including information related to a message to be combined in a shared cell from a north node;
receive user plane messages from a plurality of south nodes included in the shared cell, respectively;
identify packets to be combined from among respective packets included in the received user plane messages based on the information related to the message to be combined in the shared cell; and
determine respective uplink counter values for the plurality of south nodes by counting the identified packets to be combined.

12. The middle node of claim 11, wherein the at least one processor is configured to:

store the identified packets to be combined in a memory;
call packets related to a symbol to be combined stored in the memory at predetermined timing to a combiner; and
determine respective uplink combining counter values for the plurality of south nodes by counting the called packets.

13. The middle node of claim 12, wherein the at least one processor is configured to:

receive information related to a first interval or a second interval for counter reporting via a control plane message from the north node; and
transmit the respective uplink counter values and uplink combining counter values for the plurality of south nodes to the north node for each of the first interval, or transmit the respective uplink counter values and uplink combining counter values for the plurality of south nodes to a memory or storage server of the north node in a file format for each of the second interval.

14. The middle node of claim 1,

wherein the information related to the message to be combined in the shared cell comprises information about a transport flow and an extended antenna-carrier (eAxC) identifier (ID) of a message to be combined among uplink messages to be transmitted from the plurality of south nodes, and
wherein the information about the transport flow comprises a source media access control (MAC) or Internet protocol (IP) address and a destination MAC or IP address of the message to be combined.

15. The middle node of claim 11, wherein the at least one processor is configured to:
perform the operations of the method described in claims 5 to 10.

# FIG. 1A

FIG. 1B

# FIG. 2

## FIG. 3

# FIG. 4

| Preamble [8 Bytes] | Destination MAC Address [6 Bytes] | Source MAC Address [6 Bytes] | VLAN Tag [4 Bytes] | Type/Length [Ethertype] [2 Bytes] | Payload [42...1500 Bytes] | FCS [4 Bytes] | IFG [12 Bytes] |
|---|---|---|---|---|---|---|---|

400    410    420    430    440

**FIG. 5A**

500a

| 0 (msb) | 1 | 2 | 3 | 4 | 5 | 6 | 7 (lsb) | # of bytes | | |
|---|---|---|---|---|---|---|---|---|---|---|
| Section Type 1 : DL/UL control msgs | | | | | | | | | | |
| transport hesder (501) | | | | | | | Octel 1 | 8 | Octel 1 | |
| dataDirection | payloadVersion | | filterIndex (504) | | | | | 1 | Octel 9 | Application Header (540) |
| frameId (506) | | | | | | | | 1 | Octel 10 | |
| subframeId (508) | | | | slotId (510) | | | | 1 | Octel 11 | |
| slotId | | startSymbolId (512) | | | | | | 1 | Octel 12 | |
| numberOfsections (514) | | | | | | | | 1 | Octel 13 | |
| sectionType = 1 (516) | | | | | | | | 1 | Octel 14 | |
| udCompHdr (518) | | | | | | | | 1 | Octel 15 | |
| reserved | | | | | | | | 1 | Octel 16 | |
| sectionId | | | | | | | | 1 | Octel 17 | |
| sectionId | | | rd | symInc | startPrbc | | | 1 | Octel 18 | |
| startPrbc | | | | | | | | 1 | Octel 19 | |
| numPrbc | | | | | | | | 1 | Octel 20 | |
| reMask[11:4] | | | | | | | | 1 | Octel 21 | |
| reMask[3:0] | | numSymbol | | | | | | 1 | Octel 22 | |
| ef=1 (520) | beamId[14:8] | | | | | | | 1 | Octel 23 | |
| beamId[7:0] | | | | | | | | 1 | Octel 24 | |
| Section Extensions as indicated by "ef" | | | | | | | | var | Octel 25 | |
| ... | | | | | | | | | | |
| sectionId | | | | | | | | 1 | Octet N | Section Header (542) |
| sectionId (522) | | | rb (524) | symInc | startPrbc (526) | | | 1 | N+1 | |
| startPrbc | | | | | | | | 1 | N+2 | |
| numPrbc (528) | | | | | | | | 1 | N+3 | |
| reMask[11:4] (530) | | | | | | | | 1 | N+4 | |
| reMask[3:0] | | numSymbol (532) | | | | | | 1 | N+5 | |
| ef=0 (534) | beamId[14:8] (536) | | | | | | | 1 | N+6 | |
| beamId[7:0] (538) | | | | | | | | 1 | N+7 | |
| Section Extensions as indicated by "ef" | | | | | | | | var | N+8 | |
| NOTE: Shading: yellow is transport header. pink is radio application header, others are repeated sections | | | | | | | | | | |

502

30

# FIG. 5B

/500b

| Section Type 3 :PRACH & mixed-numerology | | | | | | | | # of bytes | |
|---|---|---|---|---|---|---|---|---|---|
| 0 (msb) | 1 | 2 | 3 | 4 | 5 | 6 | 7 (lsb) | # of bytes | |
| transport header | | | | | | | | 8 | Octel 1 |
| dataDirection | payloadVersion | | | filterIndex | | | | 1 | Octel 9 |
| frameId | | | | | | | | 1 | Octel 10 |
| subframeId | | | | slotId | | | | 1 | Octel 11 |
| slotId | | | startSymbolId | | | | | 1 | Octel 12 |
| numberOfsections | | | | | | | | 1 | Octel 13 |
| sectionType = 3 | | | | | | | | 1 | Octel 14 |
| timeOffset (550) | | | | | | | | 1 | Octel 15 |
| frameStructure (552) | | | | | | | | 1 | Octel 17 |
| cpLength (554) | | | | | | | | 1 | Octel 18 |
| udCompHdr (556) | | | | | | | | 1 | Octel 20 |
| sectionId | | | | | | | | 1 | Octel 21 |
| sectionId | | | rd | symInc | startPrbc | | | 1 | Octel 22 |
| startPrbc | | | | | | | | 1 | Octel 23 |
| numPrbc | | | | | | | | 1 | Octel 24 |
| reMask[11:4] | | | | | | | | 1 | Octel 25 |
| reMask[3:0] | | | numSymbol | | | | | 1 | Octel 26 |
| ef | beamId[14:8] | | | | | | | 1 | Octel 27 |
| beamId[7:0] | | | | | | | | 1 | Octet 28 |
| freqOffset | | | | | | | | 1 | Octel 29 |
| reserved (8 bits) | | | | | | | | 1 | Octel 32 |
| Section Extensions as indicated by "ef" | | | | | | | | var | Octel 33 |
| . . . | | | | | | | | | |
| sectionId | | | | | | | | 1 | Octet N |
| sectionId | | | rb | symInc | startPrbc | | | 1 | N+1 |
| startPrbc | | | | | | | | 1 | N+2 |
| numPrbc | | | | | | | | 1 | N+3 |
| reMask[11:4] | | | | | | | | 1 | N+4 |
| reMask[3:0] | | | numSymbol | | | | | 1 | N+5 |
| ef=0 | beamId[14:8] | | | | | | | 1 | N+6 |
| beamId[7:0] | | | | | | | | 1 | N+7 |
| freqOffset | | | | | | | | 3 | N+8 |
| reserved (8 bits) | | | | | | | | 1 | N+11 |
| Section Extensions as indicated by "ef" | | | | | | | | var | N+12 |

**FIG. 6**

EP 4 664 778 A1

# FIG. 7

FHM/Cascade O-RU — 720

Combine Functionl Block — 760

North Node — 710

B₁ — 750a
U-plane Memory — 725a
Packet Timing Check (packets could be dropped if too early or too late) — 735a
A₁ — 740a
South Node #1 — 730a

Bₙ — 750n
U-plane Memory — 725b
Packet Timing Check (packets could be dropped if too early or too late) — 735b
Aₙ — 740n
South Node #N — 730n

$A_N$ Reference point for RX_UP_UL($A_N$) — 740

$B_N$ Reference point for RX_UP_UL_COMBINED($B_N$) — 750

EP 4 664 778 A1

# FIG. 8

EP 4 664 778 A1

# FIG. 9

FHM/Cascade O-RU — 920

North Node — 910

$A_1$ — 940a

Memory or Buffer — 950

$B_1$ — 955a

Copy Functionl Block — 960

South Node #1 — 930a

South Node #N — 930n

$A_N$ — 940n

Memory or Buffer

$B_N$ — 955n

$A_N$    Reference point for RX_##_##($A_N$)

$B_N$    Reference point for RX_##_##_COPIED ($B_N$)

# FIG. 10

EP 4 664 778 A1

# FIG. 11

North node — 1105
Middle Node — 1110
South node — 1115

Retrieval of Middle Node informotion (Topology Discovery) — S1101

Retrieval of O-RU informotion (Topology Discovery) — S1102

Configure U-plane configuration (eAxC-id, Transport flow) — S1103

Configure shared-cell-copy-entities and shared-cell-combine-entities (eAxC-id, Transport flow) — S1104

Configure performance counter for Rx-Window, Tx-stats (Notification, file upload) — S1105

Configure performance counter for shared-cell-stats/shared-cell-measurement-objects (copy, combine) (Notification, file upload) — S1106

S1107 — Initiate CU-Plane flow — S1108

Copy-combine for CU-Plane packets

Notification, file upload for configued counter — S1109

Notification, file upload for configued counter — S1110

EP 4 664 778 A1

# FIG. 12

| o-ran-performance-management v' 4.00 | | | | 2024-01-31 | | | | | | | | | | |
|---|---|---|---|---|---|---|---|---|---|---|---|---|---|---|
| Top | level1 | level2 | level3 | level4 | level5 | level6 | level7 | level8 | mandatory | version | type | length/range | value | register |
| feature | | GRANULARITY-TRANSPORT-MEASUREMENT | | | | | | | | | | | | |
| | | GRANULARITY-EAXC-ID-MEASUREMENT | | | | | | | | | | | | |
| | WG4 | SHARED-CELL-STATS | | | | | | | | | | | | |
| measurement-capabilities | measurement-capabilities **1205** | transceiver-object | measurement-object | /performance-measurement-objects/transceiver-measurement-objects/measurement-object | | | | | | | leafref | | | |
| | | rx-window-objects | measurement-object | /performance-measurement-objects/rx-window-measurement-objects/measurement-object | | | | | | | leafref | | | |
| | | tx-stats-objects | measurement-object | /performance-measurement-objects/tx-measurement-objects/measurement-object | | | | | | | leafref | | | |
| | | shared-cell-stats-objects | measurement-object | /performance-measurement-objects/copy-combine-measurement-objects/measurement-object | | | | | | 14 | leafref | | | |
| | | epe-stats-objects | measurement-object | /performance-measurement-objects/epe-measurement-objects/measurement-object | | | | | | | leafref | | | |
| | | | component-class | type identityref { base ianahw:hardware-class; } | | | | | | | identityref | | | |
| | | symbol-rssi-objects | measurement-object | /performance-measurement-objects/symbol-rssi-measurement-objects/measurement-object | | | | | | | leafref | | | |
| performance-measurement-objects | measurement-group **1210** | enable-SFTP-upload | | | | | | | deprecated | | boolean | false(default) | | |
| | | enable-file-upload | | | | | | | | | boolean | false(default) | | |
| | | enable-random-file-upload | | | | | | | | | boolean | false(default) | | |
| | | remote-SFTP-uploads | remote-SFTP-upload-path | sftp://<username>@<host>[:<port>]/path | | | | | deprecated | | inet:uri | | | |
| | | | o-ran-file-mgmt:credential-information | password | password | | | | deprecated | | string | | | |
| | | | | server | keys | algorithm | | | deprecated | | asymmetric-key-algorithm-ref | | | |
| | | | | | | public-key | | | deprecated | | binary | | | |
| | | | | certificate | certificate | | | | deprecated | | | | | |
| | | remote-file-uploads | remote-file-upload-path | sftp://<username>@<host>[:port]/path, ftpes://<username>@<host>[:port]/path | | | | | | | inet:uri | | | |
| | | | o-ran-file-mgmt:credential-information | password | password | | | | | | string | | | |
| | | | | server | keys | algorithm | | | | | asymmetric-key-algorithm-ref | | | |
| | | | | | | public-key | | | | | binary | | | |
| | | | | certificate | certificate | | | | | | | | | |
| | | transceiver-measurement-interval | | | | | | | | | uint16 | seconds | | |
| | | epe-measurement-interval | | | | | | | | | uint16 | seconds | | |
| | | rx-window-measurement-interval | | | | | | | | | uint16 | seconds | | |
| | | tx-measurement-interval | | | | | | | | | uint16 | seconds | | |
| | | shared-cell-measurement-interval | | if-feature feat:SHARED-CELL-STATS | | | | | | 14 | uint16 | seconds | | |
| | | symbol-rssi-measurement-interval | | | | | | | | | uint16 | seconds | | |
| | | notification-interval | | | | | | | | | uint16 | seconds | | |
| | | file-upload-interval | | | | | | | | | uint16 | seconds | | |
| | | max-bin-count | | | | | | | | | uint16 | true | | |
| | | transceiver-measurement-objects **1215** | measurement-object | | | | | | | | enumeration | RX_POWER/RX_POWER_TX_BIAS_COUNT/TX_BIAS_COUNT_LANE_2/TX_BIAS_COUNT_LANE_3/TX_BIAS_COUNT_LANE_4/VOLTAGE/TEMPERATURE | | |
| | | rx-window-measurement-objects | measurement-object | | | | | | | | enumeration | RX_ON_TIME/RX_EARLY/RX_LATE/RX_CORRUPT/RX_DUPL/RX_TOTAL/RX_ON_TIME_C/RX_EARLY_C/RX_LATE_C/RX_SEQ_D_ERR/RX_SEQID_ERR_C/RX | | |
| | | tx-measurement-object | measurement-object | | | | | | | | enumeration | TX_TOTAL/TX_TOTAL_C | | |
| | | shared-cell-measurement-objects | measurement-object | | if-feature feat:SHARED-CELL-STATS | | | | | 14 | enumeration | RX_UP_UL/RX_UP_UL_COMBINED | | |
| | | | active | | | | | | 14 | boolean | false(default) | | |
| | | | object-unit | | | | | | 14 | enumeration | TRANSPORT | | |
| | | | report-info | | | | | | 14 | enumeration | COUNT | | |
| | | | shared-cell-measurement-result-grouping | object-unit-id | TRANSPORT | pe-measured-result | processing-element | | 14 | leafref | /o-ran-pe/processing-elements/o-ran-pe:ru-elements/o-ran-pe:name | | |
| | | | | | | | count | | 14 | uint64 | | | |
| | | symbol-rssi-measurement-objects | measurement-object | | | | | | | 7 | enumeration | ALL_UL_SYMBOLS/CONFIGURED_SYMBOLS | | |
| | | epe-measurement-objects | measurement-object | | | | | | | | enumeration | TEMPERATURE/POWER/VOLTAGE/CURRENT | | |
| measurement-result-stats | measurement-notification | transceiver-stats | measurement-object | /performance-measurement-objects/transceiver-measurement-objects/measurement-object | | | | | | | leafref | path '/performance-…' | | |
| | | rx-window-stats | measurement-object | /performance-measurement-objects/rx-window-measurement-objects/measurement-object | | | | | | | leafref | leafpath '/performance-…'ef | | |
| | | tx-stats | measurement-object | /performance-measurement-objects/tx-measurement-objects/measurement-object | | | | | | | leafref | path '/performance-…' | | |
| | | shared-cell-stats **1220** | measurement-object | /performance-measurement-objects/copy-combine-measurement-objects/measurement-object | | | | | | | leafref | path '/performance-…' | | |
| | | | start-and-end-time | start-time | | | | | | | yang-types:date-and-time | | | |
| | | | | end-time | | | | | | | yang-types:date-and-time | | | |
| | | | multiple-shared-cell-measurement-result | shared-cell-measurement-result-grouping | object-unit-id | TRANSPORT | pe-measured-result | processing-element | | 14 | leafref | /o-ran-pe/processing-elements/o-ran-pe:ru-elements/o-ran-pe:name | | |
| | | | | | | | | count | | 14 | uint64 | | | |
| | | epe-stats | start-and-end-time | start-time | | | | | deprecated | | yang-types:date-and-time | | | |
| | | | | end-time | | | | | deprecated | | yang-types:date-and-time | | | |
| | | | epe-measurement-result-grouping | epe-measurement-result | object-unit-id | dware/hw:component/hw:class | | | deprecated | | leafref | path '/hw:hardware/hw:comp-…' | | |
| | | | | | min | | | | deprecated | | decimal64 | fraction-digits 4 | | |
| | | | | | max | | | | deprecated | | decimal64 | fraction-digits 4 | | |
| | | | | | max | | | | deprecated | | decimal64 | fraction-digits 4 | | |
| | | epe-statistics | measurement-object | /performance-measurement-objects/epe-measurement-objects/measurement-object | | | | | | | leafref | | | |
| | | symbol-rssi-stats | measurement-object | /performance-measurement-objects/symbol-rssi-measurement-objects/measurement-object | | | | | | 7 | leafref | | | |

# FIG. 13

NORTH NODE 1300

TRANSCEIVER UNIT 1320 ↔ PROCESSOR 1310 ↔ MEMORY 1330

## FIG. 14

**MIDDLE NODE** — 1400

| TRANSCEIVER UNIT — 1420 | ↔ | PROCESSOR — 1410 | ↔ | MEMORY — 1430 |

FIG. 15

# FIG. 16

START

RECEIVE INFORMATION RELATED TO MESSAGE
TO BE COMBINED IN SHARED CELL — S1610

RECEIVE USER PLANE MESSAGES FROM
PLURALITY OF SOUTH NODES, RESPECTIVELY — S1620

IDENTIFY PACKETS TO BE COMBINED FROM AMONG
RESPECTIVE PACKETS INCLUDED IN USER PLANE
MESSAGES BASED ON INFORMATION RELATED TO
MESSAGES TO BE COMBINED IN SHARED CELL — S1630

DETERMINE RESPECTIVE UPLINK COUNTER
VALUES FOR PLURALITY OF SOUTH NODES BY
COUNTING IDENTIFIED PACKETS TO BE COMBINED — S1640

END

## INTERNATIONAL SEARCH REPORT

| International application No. |
|---|
| **PCT/KR2024/001769** |

| | | |
|---|---|---|
| **A.** | **CLASSIFICATION OF SUBJECT MATTER** | |
| | **H04B 7/022**(2017.01)i; **H04W 16/24**(2009.01)i; **H04W 24/02**(2009.01)i; **H04W 88/08**(2009.01)i; **H04L 41/06**(2022.01)i; **H04W 92/20**(2009.01)i; **H04L 43/0817**(2022.01)i; **H04L 43/08**(2022.01)i; **H04L 43/16**(2022.01)i | |
| | According to International Patent Classification (IPC) or to both national classification and IPC | |

| | |
|---|---|
| **B.** | **FIELDS SEARCHED** |

Minimum documentation searched (classification system followed by classification symbols)

H04B 7/022(2017.01); H04L 1/00(2006.01); H04L 1/18(2006.01); H04W 16/14(2009.01); H04W 16/28(2009.01); H04W 24/02(2009.01); H04W 24/10(2009.01); H04W 72/04(2009.01); H04W 84/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프론트홀(fronthaul), O-RAN, 미들 노드(middle node), 결합(combined), 카운터 (counter)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | Publicly Available Specification (PAS); O-RAN Fronthaul Control, User and Synchronization Plane Specification v07.02; (O-RAN-WG4.CUS.0-v07.02). ETSI TS 103 859 V7.0.2. 08 September 2022.<br>See pages 44 and 228; table 9-1; and figure 13-2. | 1-15 |
| A | US 2022-0345896 A1 (MAVENIR SYSTEMS, INC.) 27 October 2022 (2022-10-27)<br>See paragraphs [0174]-[0227]. | 1-15 |
| A | WO 2023-007452 A1 (JIO PLATFORMS LIMITED) 02 February 2023 (2023-02-02)<br>See claims 1-14. | 1-15 |
| A | KR 10-2021-0046486 A (SAMSUNG ELECTRONICS CO., LTD.) 28 April 2021 (2021-04-28)<br>See claims 1-5. | 1-15 |
| A | US 2022-0255679 A1 (ULAK HABERLESME A.S.) 11 August 2022 (2022-08-11)<br>See claims 1-9. | 1-15 |

| | | |
|---|---|---|
| ☐ Further documents are listed in the continuation of Box C. | ☑ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2024** | **02 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 664 778 A1

| INTERNATIONAL SEARCH REPORT | | International application No. |
|---|---|---|
| Information on patent family members | | PCT/KR2024/001769 |

| Patent document cited in search report | | | Publication date (day/month/year) | Patent family member(s) | | | Publication date (day/month/year) |
|---|---|---|---|---|---|---|---|
| US | 2022-0345896 | A1 | 27 October 2022 | EP | 4090065 | A2 | 16 November 2022 |
| | | | | EP | 4090065 | A3 | 01 February 2023 |
| WO | 2023-007452 | A1 | 02 February 2023 | CN | 116648946 | A | 25 August 2023 |
| | | | | EP | 4211985 | A1 | 19 July 2023 |
| | | | | KR | 10-2023-0132434 | A | 15 September 2023 |
| | | | | US | 2024-0015790 | A1 | 11 January 2024 |
| KR | 10-2021-0046486 | A | 28 April 2021 | CN | 114556804 | A | 27 May 2022 |
| | | | | EP | 4018752 | A1 | 29 June 2022 |
| | | | | JP | 2022-553032 | A | 21 December 2022 |
| | | | | US | 11166271 | B2 | 02 November 2021 |
| | | | | US | 11778632 | B2 | 03 October 2023 |
| | | | | US | 2021-0120531 | A1 | 22 April 2021 |
| | | | | US | 2022-0053472 | A1 | 17 February 2022 |
| | | | | US | 2024-0023122 | A1 | 18 January 2024 |
| | | | | WO | 2021-075935 | A1 | 22 April 2021 |
| US | 2022-0255679 | A1 | 11 August 2022 | TR | 2022001609 | A2 | 22 August 2022 |
| | | | | US | 11652579 | B2 | 16 May 2023 |

Form PCT/ISA/210 (patent family annex) (July 2022)